# EUROPEAN PATENT SPECIFICATION

(11) **EP 4 482 178 B1**
(45) Date of publication and mention of the grant of the patent: **24.06.2026**
(21) Application number: 23769562.2
(22) Date of filing: 01.03.2023
(51) Int. Cl.: H04L 61/00, H04L 61/2557, H04L 61/5046, H04L 61/5092, H04L 9/40, H04W 4/06, H04L 101/659

(54) **MESSAGE TRANSMISSION METHOD AND COMMUNICATION APPARATUS**
NACHRICHTENÜBERTRAGUNGSVERFAHREN UND KOMMUNIKATIONSVORRICHTUNG
PROCÉDÉ DE TRANSMISSION DE MESSAGE ET APPAREIL DE COMMUNICATION

(30) Priority: 18.03.2022 CN 202210272989
(43) Date of publication of application: 25.12.2024
(73) Proprietor: Huawei Technologies Co., Ltd., Shenzhen, Guangdong 518129 (CN)
(72) Inventor: ZHUANG, Shunwan, Shenzhen, Guangdong 518129 (CN); HUANG, Mingqing, Shenzhen, Guangdong 518129 (CN); WANG, Haibo, Shenzhen, Guangdong 518129 (CN); CHEN, Shuanglong, Shenzhen, Guangdong 518129 (CN); LI, Zhenbin, Shenzhen, Guangdong 518129 (CN); GENG, Nan, Shenzhen, Guangdong 518129 (CN)
(74) Representative: Gill Jennings & Every LLP
(86) International application number: PCT/CN2023/078977
(87) International publication number: WO 2023/174055

(56) References cited:
- CN-A- 101 917 434
- CN-A- 106 878 291
- CN-A- 111 131 548
- CN-A- 112 929 269
- CN-B- 112 929 279
- US-B1- 11 115 309

## Description

This application claims priority to Chinese Patent Application No. 202210272989.6, filed with the China National Intellectual Property Administration on March 18, 2022 and entitled "PACKET TRANSMISSION METHOD AND COMMUNICATION APPARATUS".

### TECHNICAL FIELD

This application relates to the communication field, and more specifically, to a packet transmission method and a communication apparatus.

### BACKGROUND

In the current Internet, a root cause of many security problems is that a source address is untrusted. Therefore, source address validation (Source Address Validation, SAV) is exceedingly important to reduce source address spoofing and improve Internet security.

A distributed source address validation protocol is used in a distributed source address validation (Distributed Source Address Validation, DSAV) solution, to dynamically update a source address filtering table based on learned routing information and use the source address filtering table to check a source address in a received data packet. In the DASV solution, a whitelist validation mode or a graylist validation mode may be deployed on an interface of a router. When a source address prefix cannot match the source address filtering table, the whitelist validation mode and the graylist validation mode have two completely different processing results. It can be learned that the two validation modes cannot implement high-precision source address validation.

Chinese patent application CN112929279B is background art.

### SUMMARY

Embodiments of this application provide a packet transmission method and a communication apparatus, to help improve accuracy of source address validation.

According to a first aspect, a packet transmission method is provided. The method includes: A validation device obtains an address prefix from a sending device. The validation device sends a response packet to the sending device, where the response packet indicates usage status information of the address prefix at a receiving device.

In this manner, the validation device may enable, by using the response packet, the sending device to learn of the usage status information of the address prefix at the receiving device, so that the sending device processes an exception of the address prefix, to help improve accuracy of source address validation, achieve a zero false positive, and minimize a false negative.

In some embodiments of the first aspect, the address prefix includes a source address prefix, the validation device is the receiving device, and that a validation device obtains an address prefix from a sending device includes: The validation device receives a source prefix advertisement (Source Prefix Advertisement, SPA) packet from the sending device, where the SPA packet includes the source address prefix. In this way, the receiving device can obtain the source address prefix by using the SPA packet.

In some embodiments of the first aspect, the address prefix includes a source address prefix, the validation device is the receiving device, and that a validation device obtains an address prefix from a sending device includes: The validation device receives an SPA packet from the sending device, where the SPA includes an identifier of the sending device and the source address prefix. The validation device receives a destination prefix probing (Destination Prefix Probing, DPP) packet from the sending device, where the DPP packet includes the identifier of the sending device. The validation device determines the source address prefix based on the identifier in the DPP packet and the SPA packet. In this way, the receiving device can obtain the source address prefix by using the SPA packet and the DPP packet.

In some embodiments of the first aspect, the method further includes: The validation device outputs first alarm information, where the first alarm information is used to provide a suggestion for a validation mode that is for validating the source address prefix. In this way, the validation device outputs the first alarm information, so that a configuration of the source address prefix at the validation device (that is, the receiving device) can be improved, to ensure accuracy of address validation.

In some embodiments of the first aspect, the address prefix includes a source address prefix, the validation device is a control device, and that a validation device obtains an address prefix from a sending device includes: The validation device receives an SPA packet from the receiving device, where the SPA packet includes the source address prefix. In this way, the control device can obtain the source address prefix by using the SPA packet.

In some embodiments of the first aspect, the address prefix includes a source address prefix, the validation device is a control device, and that a validation device obtains an address prefix from a sending device includes: The validation device receives an SPA packet from the receiving device, where the SPA includes an identifier of the sending device and the source address prefix. The validation device receives a destination prefix probing DPP packet from the receiving device, where the DPP packet includes the identifier of the sending device. The validation device determines the source address prefix based on the identifier in the DPP packet and the SPA packet. In this way, the control device can obtain the source address prefix by using the SPA packet and the DPP packet.

In some embodiments of the first aspect, the method further includes: The validation device sends first alarm information to the receiving device, where the first alarm information is used to provide a suggestion for a validation mode that is for validating the source address prefix. In this way, the validation device (that is, the control device) sends the first alarm information to the receiving device, so that a configuration of the source address prefix at the receiving device can be improved, to ensure accuracy of address validation.

In some embodiments of the first aspect, if the usage status information indicates that the source address prefix has a corresponding forwarding entry at the receiving device, and an outgoing interface corresponding to the source address prefix in the forwarding entry is inconsistent with an incoming interface through which the receiving device receives the SPA packet, the first alarm information indicates that a strict unicast reverse path forwarding (Unicast Reverse Path Forwarding, URPF) validation mode cannot be configured at the receiving device.

In some embodiments of the first aspect, if the usage status information indicates that the source address prefix has no corresponding forwarding entry but has a corresponding routing entry at the receiving device, and the routing entry is valid, the first alarm information indicates that an incorrect configuration exists at the receiving device, where the incorrect configuration prevents the routing entry from generating the forwarding entry; or a processing fault that occurs when the routing entry generates the forwarding entry exists at the receiving device.

In this way, when the source address prefix has a specific exception at the receiving device, the corresponding first alarm information is used for indication, to avoid a false positive or false negative caused by an error during validation of the source address prefix.

In some embodiments of the first aspect, the method further includes: If the usage status information indicates that the source address prefix has no corresponding forwarding entry but has a corresponding routing entry at the receiving device, and the routing entry is invalid, the validation device determines a reason why the routing entry is invalid; and the validation device sends, to the sending device, indication information indicating the reason. In this way, the validation device may further notify the sending device of a reason for an exception, so that the sending device processes the exception or performs subsequent improvement based on the exception.

In some embodiments of the first aspect, the response packet indicates first usage status information of the source address prefix at the receiving device, and the first usage status information indicates any one of the following: The source address prefix has the corresponding forwarding entry at the receiving device, and the outgoing interface corresponding to the source address prefix in the forwarding entry is consistent with the incoming interface through which the receiving device receives the SPA packet. The source address prefix has the corresponding forwarding entry at the receiving device, and the outgoing interface corresponding to the source address prefix in the forwarding entry is inconsistent with the incoming interface through which the receiving device receives the SPA packet. The source address prefix has no corresponding forwarding entry but has the corresponding routing entry at the receiving device, and the routing entry is valid. The source address prefix has no corresponding forwarding entry but has the corresponding routing entry at the receiving device, and the routing entry is invalid. Alternatively, the source address prefix has no corresponding routing entry at the receiving device.

In some embodiments of the first aspect, the address prefix includes a source address prefix, the validation device is a control device, and that a validation device obtains an address prefix from a sending device includes: The validation device receives a source address validation entry from the receiving device, where the source address validation entry includes the source address prefix. Before the validation device sends the response packet, the method further includes: The validation device receives, from the receiving device, information about a validation mode configured for each interface of the receiving device. The validation device receives a traffic packet from the receiving device, where the traffic packet is obtained by performing traffic sampling on an interface that is of the receiving device and that supports DSAV.

In some embodiments of the first aspect, the method further includes: The validation device sends modification suggestion information to the receiving device, where the modification suggestion information is used to suggest adjusting a validation mode of the interface that is of the receiving device and that supports the DSAV. In this way, the validation device may notify the receiving device to perform proper adjustment or modification. This can ensure that a subsequent data packet is correctly processed, to avoid a false positive or a false negative.

In some embodiments of the first aspect, the usage status information indicates that a data packet having the source address prefix is filtered at the interface that is of the receiving device and that supports the DSAV. In this way, the sending device may improve or adjust the source address prefix based on this, for example, supplement a previously omitted source address prefix, or resend an SPA packet and/or a DPP packet, to prevent a subsequent data packet from being incorrectly blocked.

In some embodiments of the first aspect, the address prefix includes a destination address prefix, the validation device is the receiving device, and that a validation device obtains an address prefix from a sending device includes: The validation device receives the DPP packet from the sending device, where the DPP packet includes the destination address prefix. In this way, the receiving device can obtain the destination address prefix by using the DPP packet.

In some embodiments of the first aspect, the method further includes: The validation device outputs second alarm information, where the second alarm information is used to provide a suggestion for a validation mode that is for validating the destination address prefix. In this way, the validation device outputs the second alarm information, so that a configuration of the destination address prefix at the validation device (that is, the receiving device) can be improved, to ensure accuracy of address validation.

In some embodiments of the first aspect, the address prefix includes a destination address prefix, the validation device is the control device, and that a validation device obtains an address prefix from a sending device includes: The validation device receives the DPP packet from the receiving device, where the DPP packet includes the destination address prefix. In this way, the control device can obtain the destination address prefix by using the DPP packet.

In some embodiments of the first aspect, the method further includes: The validation device sends second alarm information to the receiving device, where the second alarm information is used to provide a suggestion for a validation mode that is for validating the destination address prefix. In this way, the validation device (that is, the control device) sends the second alarm information to the receiving device, so that a configuration of the destination address prefix at the receiving device can be improved, to ensure accuracy of address validation.

In some embodiments of the first aspect, if the usage status information indicates that the destination address prefix has no corresponding forwarding entry but has a corresponding routing entry at the receiving device, the second alarm information indicates that an incorrect configuration exists at the receiving device, where the incorrect configuration prevents the routing entry from generating the forwarding entry; or a processing fault that occurs when the routing entry generates the forwarding entry exists at the receiving device. In this way, when the destination address prefix has a specific exception at the receiving device, the corresponding second alarm information is used for indication, to avoid a false positive or false negative caused by an error during validation of the destination address prefix.

In some embodiments of the first aspect, the response packet indicates second usage status information of the destination address prefix at the receiving device, and the second usage status information indicates any one of the following: The destination address prefix has the corresponding forwarding entry at the receiving device, and the routing entry used to generate the forwarding entry originates from the receiving device. The destination address prefix has the corresponding forwarding entry at the receiving device, and an interface to a next hop in the routing entry used to generate the forwarding entry is of a first type, where the first type indicates that a next-hop device supports the DSAV. The destination address prefix has the corresponding forwarding entry at the receiving device, and an interface to a next hop in the routing entry used to generate the forwarding entry is of a second type, where the second type indicates that a next-hop device does not support the DSAV. The destination address prefix has no corresponding forwarding entry but has the corresponding routing entry at the receiving device. Alternatively, the destination address prefix has no corresponding routing entry at the receiving device.

In some embodiments of the first aspect, the validation device is the receiving device, and that a validation device obtains an address prefix from a sending device includes: The validation device receives an SPA packet from the sending device, where the SPA packet includes a source address prefix. Before that the validation device sends a response packet to the sending device, the method further includes: The validation device generates a source address validation entry based on the SPA packet, where the source address validation entry includes the source address prefix and an incoming interface through which the validation device receives the SPA packet. The validation device receives a data packet from the sending device, where a source address of the data packet has another source address prefix, and a first incoming interface used to receive the data packet is the same as the incoming interface used to receive the SPA packet. That the validation device sends a response packet to the sending device includes: If the source address validation entry includes the another source address prefix, and a second incoming interface corresponding to the another source address prefix in the source address validation entry is different from the first incoming interface, the validation device sends the response packet to the sending device, where the usage status information indicates that the another source address prefix belongs to a graylist entry of the first incoming interface, and a graylist validation mode is configured for the first incoming interface.

In this way, the receiving device sends the response packet to the sending device, so that the sending device can learn of source address prefixes that are blocked by an incoming interface in the graylist validation mode. Therefore, the sending device may determine whether an exception (for example, omission) exists when the source address prefix is processed previously. In addition, when the omission is found, correction may be performed in time. This can avoid an improper false positive of the data packet. In other words, the false positive can be reduced.

In some embodiments of the first aspect, the method further includes: The validation device receives a corrected SPA packet from the sending device. The validation device updates the source address validation entry based on the corrected SPA packet. The validation device sends a change notification to the sending device, where the change notification indicates that the another source address prefix is no longer the graylist entry of the first incoming interface.

In this way, the sending device may determine, based on the response packet from the receiving device, whether the exception (for example, the omission) exists when the source address prefix is processed previously. In addition, when it is determined that no exception exists, an ACL filtering rule may be set to reduce transmission of an invalid packet. This can reduce signaling overheads and improve bandwidth utilization.

According to a second aspect, a packet transmission method is provided and includes: A sending device sends an address prefix to a receiving device. The sending device receives a response packet from a validation device, where the response packet indicates usage status information of the address prefix at the receiving device.

In some embodiments of the second aspect, the address prefix includes a source address prefix, and that a sending device sends an address prefix to a receiving device includes: The sending device sends a source prefix advertisement SPA packet to the receiving device, where the SPA packet includes the source address prefix.

In some embodiments of the second aspect, the address prefix includes a source address prefix, and that a sending device sends an address prefix to a receiving device includes: The sending device sends an SPA packet to the receiving device, where the SPA packet includes an identifier of the sending device and the source address prefix. The sending device sends a destination prefix probing DPP packet to the receiving device, where the DPP packet includes the identifier of the sending device.

In some embodiments of the second aspect, if the usage status information indicates that the source address prefix has no corresponding forwarding entry but has a corresponding routing entry at the receiving device, and the routing entry is invalid, the method further includes: The sending device receives indication information that is from the validation device and that indicates a reason why the routing entry is invalid.

In some embodiments of the second aspect, the method further includes: The sending device determines, based on the response packet, a configuration adjustment policy of the source address prefix at the sending device.

In some embodiments of the second aspect, the response packet indicates first usage status information of the source address prefix at the receiving device, and the first usage status information indicates any one of the following: The source address prefix has the corresponding forwarding entry at the receiving device, and an outgoing interface corresponding to the source address prefix in the forwarding entry is consistent with an incoming interface through which the receiving device receives the SPA packet. The source address prefix has the corresponding forwarding entry at the receiving device, and an outgoing interface corresponding to the source address prefix in the forwarding entry is inconsistent with an incoming interface through which the receiving device receives the SPA packet. The source address prefix has no corresponding forwarding entry but has the corresponding routing entry at the receiving device, and the routing entry is valid. The source address prefix has no corresponding forwarding entry but has the corresponding routing entry at the receiving device, and the routing entry is invalid. Alternatively, the source address prefix has no corresponding routing entry at the receiving device.

In some embodiments of the second aspect, the usage status information indicates that a data packet having a source address prefix is filtered at an interface that is of the receiving device and that supports DSAV.

In some embodiments of the second aspect, the address prefix includes a destination address prefix, and that a sending device sends an address prefix to a receiving device includes: The sending device sends the DPP packet to the receiving device, where the DPP packet includes the destination address prefix.

In some embodiments of the second aspect, the method further includes: The sending device determines, based on the response packet, a configuration adjustment policy of the destination address prefix at the sending device.

In some embodiments of the second aspect, the response packet indicates second usage status information of the destination address prefix at the receiving device, and the second usage status information indicates any one of the following: The destination address prefix has a corresponding forwarding entry at the receiving device, and a routing entry used to generate the forwarding entry originates from the receiving device. The destination address prefix has a corresponding forwarding entry at the receiving device, and an interface to a next hop in a routing entry used to generate the forwarding entry is of a first type, where the first type indicates that a next-hop device supports the DSAV. The destination address prefix has a corresponding forwarding entry at the receiving device, and an interface to a next hop in a routing entry used to generate the forwarding entry is of a second type, where the second type indicates that a next-hop device does not support the DSAV. The destination address prefix has no corresponding forwarding entry but has a corresponding routing entry at the receiving device. Alternatively, the destination address prefix has no corresponding routing entry at the receiving device.

In some embodiments of the second aspect, the receiving device is the validation device, and the method further includes: The sending device sends a data packet to the receiving device, where a source address of the data packet has another source address prefix, the usage status information indicates that the another source address prefix belongs to a graylist entry of a first incoming interface, a graylist validation mode is configured for the first incoming interface, and the first incoming interface is an incoming interface through which the receiving device receives the data packet.

In some embodiments of the second aspect, the method further includes: The sending device sends a corrected SPA packet to the receiving device. The sending device receives a change notification from the receiving device, where the change notification indicates that the another source address prefix is no longer the graylist entry of the first incoming interface.

In some embodiments of the second aspect, the method further includes: The sending device sets an access control list (Access Control List, ACL) filtering rule on an interface through which the response packet is received, where the ACL filtering rule indicates that the data packet having the another source address prefix is filtered to prevent the data packet from being sent.

According to a third aspect, a communication apparatus is provided. The communication apparatus includes a module or a unit configured to perform the method according to any one of the first aspect or embodiments of the first aspect.

According to a fourth aspect, a communication apparatus is provided. The communication apparatus includes a module or a unit configured to perform the method according to any one of the second aspect or embodiments of the second aspect.

According to a fifth aspect, a communication apparatus is provided. The communication apparatus includes a processor and a memory. The memory stores instructions executed by the processor. When the instructions are executed by the processor, the communication apparatus is enabled to implement the method according to any one of the first aspect or embodiments of the first aspect.

According to a sixth aspect, a communication apparatus is provided. The communication apparatus includes a processor and a memory. The memory stores instructions executed by the processor. When the instructions are executed by the processor, the communication apparatus is enabled to implement the method according to any one of the second aspect or embodiments of the second aspect.

According to a seventh aspect, a computer-readable storage medium is provided. The computer-readable storage medium stores computer-executable instructions. When the computer-executable instructions are executed by a processor, an operation of the method according to any one of the first aspect or embodiments of the first aspect is implemented, or an operation of the method according to any one of the second aspect or embodiments of the second aspect is implemented.

According to an eighth aspect, a chip or a chip system is provided. The chip or the chip system includes a processing circuit, and is configured to: perform an operation of the method according to any one of the first aspect or embodiments of the first aspect, or implement an operation of the method according to any one of the second aspect or embodiments of the second aspect.

According to a ninth aspect, a computer program or a computer program product is provided. The computer program or the computer program product is tangibly stored in a computer-readable medium and includes computer-executable instructions. When the computer-executable instructions are executed, an operation of the method according to any one of the first aspect or embodiments of the first aspect is implemented, or an operation of the method according to any one of the second aspect or embodiments of the second aspect is implemented.

### BRIEF DESCRIPTION OF DRAWINGS

The foregoing and other features, advantages, and aspects of embodiments of this application become clearer with reference to the accompanying drawings and the following detailed descriptions. In the accompanying drawings, same or similar reference numerals indicate same or similar elements.
FIG. 1 is a schematic diagram of an SPA protocol packet;
FIG. 2 is a schematic diagram of a DPP protocol packet;
FIG. 3 is a schematic diagram of an application scenario of a DSAV solution;
FIG. 4 is a schematic diagram of a scenario to which an embodiment of this application is applicable;
FIG. 5 is a schematic flowchart of a packet transmission method according to some embodiments of this application;
FIG. 6 is a signaling interaction diagram of an address validation process according to some embodiments of this application;
FIG. 7 is a signaling interaction diagram of an address validation process according to some embodiments of this application;
FIG. 8 is a signaling interaction diagram of an address validation process according to some embodiments of this application;
FIG. 9 is a signaling interaction diagram of an address validation process according to some embodiments of this application;
FIG. 10 is a signaling interaction diagram of an address validation process according to some embodiments of this application;
FIG. 11 is a signaling interaction diagram of an address validation process according to some embodiments of this application;
FIG. 12 is a signaling interaction diagram of an address validation process according to some embodiments of this application;
FIG. 13 is a signaling interaction diagram of an address validation process according to some embodiments of this application;
FIG. 14 is a schematic block diagram of a communication apparatus according to an embodiment of this application;
FIG. 15 is a schematic block diagram of a communication apparatus according to an embodiment of this application;
FIG. 16 is a schematic block diagram of a network device according to an embodiment of this application; and
FIG. 17 is a schematic block diagram of an example device that may be configured to implement an embodiment of this application.

### DESCRIPTION OF EMBODIMENTS

The following describes embodiments of this application in more detail with reference to the accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that, the accompanying drawings and embodiments of this application are merely used as examples, but are not used to limit the protection scope of this application.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Currently, a service in the Internet is forwarded based on a destination address, and a source address is not validated. However, a root cause of many security problems in the Internet is that the source address is untrusted. Therefore, SAV is exceedingly important for Internet security. Currently, one of the existing source address validation solutions is unicast reverse path forwarding (Unicast Reverse Path Forwarding, URPF). The unicast reverse path forwarding is mainly used to prevent a network attack behavior that is based on source address spoofing. The URPF may obtain a source address and an incoming interface of a packet, and then may use the source address as a destination address to search a forwarding information base (Forwarding Information Base, FIB) to check whether an interface corresponding to the source address matches the incoming interface. If the interface does not match the incoming interface, the URPF considers the source address to be spoofed and discards the packet. In this manner, the URPF can effectively defend against a malicious attack behavior that modifies the source address in a network. A validation mode used in the URPF validation solution may include a loose URPF validation mode and a strict URPF validation mode. However, the URPF solution relies heavily on the FIB. For an asymmetric routing case that may exist in the network, a case of discarding a valid data packet is prone to exist in this solution. Currently, another existing source address validation solution is DASV. The DASV dynamically updates a source address filtering table based on learned routing information and then uses the source address filtering table to check a source address in a received data packet. A source prefix advertisement (Source Prefix Advertisement, SPA) protocol packet and a destination prefix probing (Destination Prefix Probing, DPP) protocol packet are in a distributed source address validation protocol (Source Address Validation Protocol, SAV-P) used by the DASV.

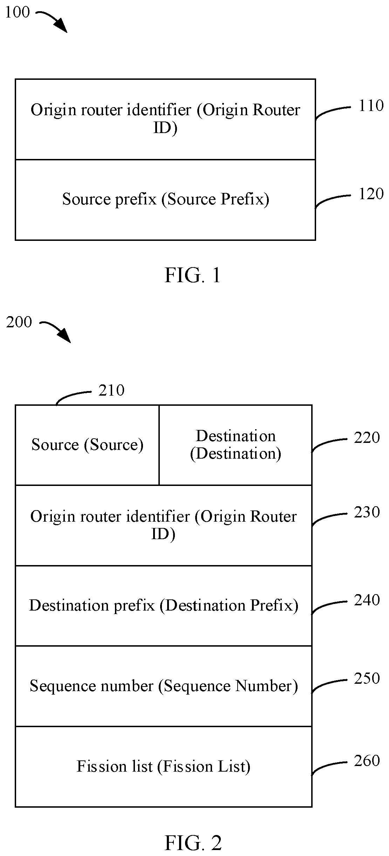

FIG. 1 is a schematic diagram of an SPA protocol packet 100. As shown in FIG. 1, the SPA protocol packet 100 includes an origin router identifier (Origin Router ID) 110 and one or more source prefixes (Source Prefixes) 120, where the one or more source prefixes 120 identify a prefix list to which an origin router belongs, for example, may include one or more address prefixes of one or more address segments allocated to the origin router. FIG. 2 is a schematic diagram of a DPP protocol packet 200. As shown in FIG. 2, the DPP protocol packet 200 includes a source (Source) 210, a destination (Destination) 220, an origin router identifier (Origin Router ID) 230, one or more destination prefixes (Destination Prefixes) 240, a sequence number 250, and a fission list (Fission List) 260. The source 210 represents a source address of the DPP protocol packet, the destination 220 represents a destination address of the DPP protocol packet, the one or more destination prefixes 240 represent a list of the destination prefixes, the sequence number 250 represents a sequence number of the DPP protocol packet, and the fission list 260 represents outgoing interface list information of the DPP protocol packet. In embodiments of this application, a router ID may be implemented as a unique identifier of a router, for example, an Internet protocol (Internet Protocol, IP) address of the router or another form. This is not limited in this application.

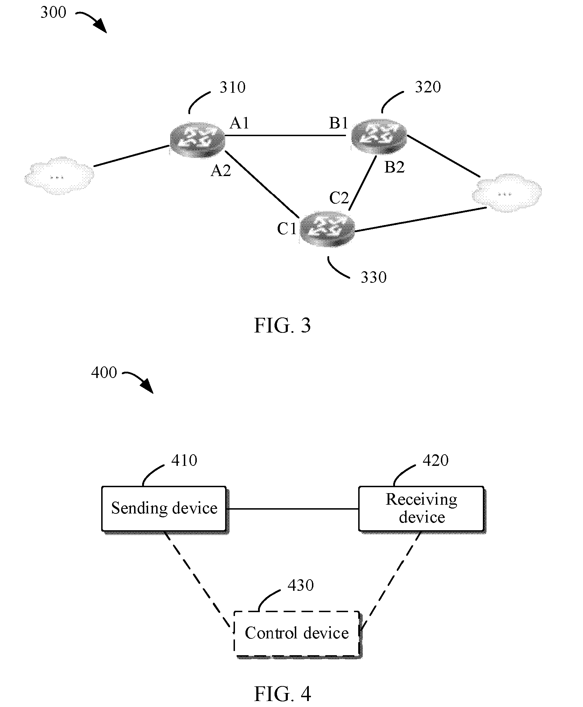

The following briefly describes a validation process of the DASV solution with reference to FIG. 3. FIG. 3 is a schematic diagram of an application scenario 300 of a DSAV solution. The scenario 300 includes a router 310, a router 320, and a router 330, and it may be assumed that the DASV solution has been deployed on the three routers. For ease of description, it may be assumed that a router ID of the router 310 is an ID 1 (for example, may be 10.0.10.1), a router ID of the router 320 is an ID 2 (for example, may be 10.0.20.1), and a router ID of the router 330 is an ID 3 (for example, may be 10.0.30.1). In addition, it may be assumed that a source prefix originating from the router 310 includes P1, a source prefix originating from the router 320 includes P2, and a source prefix originating from the router 330 includes P3.

### A router generates and broadcasts an SPA protocol packet

It is assumed that the router 310 sends an SPA protocol packet in a broadcast manner. The SPA protocol packet includes an origin router ID, that is, an ID 1. The SPA protocol packet further includes a source prefix, that is, P1. After the router 310 broadcasts the SPA protocol packet, another router (for example, the router 320 or the router 330) in a network can receive the SPA protocol packet, and can correspondingly generate a source address record entry. In addition, for a router (for example, the router 320 or the router 330) on which the DASV solution is deployed, an SPA protocol packet of the router is also generated and sent. In this manner, each router may receive an SPA protocol packet of another router. For example, the router 320 can receive the SPA protocol packet from the router 310 and an SPA protocol packet from the router 330, and generate corresponding source address record entries respectively. Table 1 shows a source address record table generated by the router 320, including a plurality of source address record entries. Each entry corresponds to a different origin router ID. This is assumed to be shown in Table 1 below.

**Table 1**

| **Origin router ID (Origin Router ID)** | **Source prefix (Source Prefix)** |
|---|---|
| ID 1 | P1 |
| ID 3 | P3 |

### The router generates and sends a DPP protocol packet

An FIB may be represented in a form of a forwarding table. It is assumed that a forwarding table of the router 310 is shown in Table 2 below. It may be understood that the router 310 may generate the forwarding table (for example, an FIB) based on a pre-stored routing table (for example, a routing information base (routing information base, RIB)) of the router 310, where the routing table includes a plurality of routing entries, and the forwarding table includes a plurality of forwarding entries. For the routing table and the forwarding table, refer to related records in a conventional technology. For brevity, details are not described again in this specification.

**Table 2**

| **Destination prefix (Destination Prefix)** | **Next hop (Next hop)** |
|---|---|
| P2 | Router 320 |
| P3 | Router 330 |

Refer to Table 2. One forwarding entry may represent one entry that is in the forwarding table and that uses one destination prefix as an index. For example, in Table 2, rows in which "P2" and the "router 320" are located belong to one forwarding entry, and rows in which "P3" and the "router 330" are located belong to another forwarding entry. The router 310 may generate a DPP protocol packet based on the forwarding entry. With reference to Table 2, the router 310 may generate a DPP protocol packet (for example, referred to as a DPP 1 protocol packet) that next hops to the router 320, and generate a DPP protocol packet (for example, referred to as a DPP 2 protocol packet) that next hops to the router 330, where field values in the DPP 1 protocol packet are shown in Table 3 below, and field values in the DPP 2 protocol packet are shown in Table 4 below.

**Table 3**

| | |
|---|---|
| Source: Router 310 | Destination: Router 320 |
| Origin Router ID: ID 1 | |
| Destination Prefix: {P2} | |
| Sequence Number: 0 | |
| Fission List: [A1] | |

Specifically, in the forwarding table (Table 2) of the router 310, a destination prefix in a forwarding entry in which a next hop is the router 320 is P2. Therefore, the Destination Prefix in Table 3 is {P2}. The Sequence Number in Table 3 represents a sequence number of the DPP 1 protocol packet, may be 0 for first sending, and is increased by 1 in subsequent updating. The Fission List in Table 3 represents outgoing interface list information of the DPP 1 protocol packet, and an outgoing interface is assumed to be an A1 interface of the router 310.

**Table 4**

| | |
|---|---|
| Source: Router 310 | Destination: Router 330 |
| Origin Router ID: ID 1 | |
| Destination Prefix: {P3} | |
| Sequence Number: 0 | |
| Fission List: [A2] | |

Specifically, in the forwarding table (Table 2) of the router 310, a destination prefix in a forwarding entry in which a next hop is the router 330 is P3. Therefore, the Destination Prefix in Table 4 is {P3}. The Sequence Number in Table 4 represents a sequence number of the DPP 2 protocol packet, may be 0 for first sending, and is increased by 1 in subsequent updating. The Fission List in Table 4 represents outgoing interface list information of the DPP 2 protocol packet, and an outgoing interface is assumed to be an A2 interface of the router 310.

The router 310 may send the DPP 1 protocol packet to the router 320. After receiving the DPP 1, the router 320 may search a corresponding source address record table (for example, Table 1) based on "Origin Router ID: ID 1" in the DPP 1, and after finding a corresponding entry, generate a corresponding source address validation entry, for example, a row in which P1 is located in Table 5. B1 in Table 5 identifies an incoming interface through which the router 320 receives the DPP 1 protocol packet.

**Table 5**

| **Source prefix (Source Prefix)** | **Incoming interface (Incoming interface)** | **Sequence number (Seq #)** | **Fission list (Fission List)** |
|---|---|---|---|
| P1 | B1 | 0 | [A1] |
| P3 | B2 | 0 | [C2] |

Similarly, it may be assumed that the router 330 also sends a DPP protocol packet (for example, referred to as a DPP 3 protocol packet) to the router 320, and the router 320 receives the DPP protocol packet from the router 330 through an incoming interface B2 of the router 320, and similarly generates a source address validation entry, for example, a row in which P3 is located in Table 5. As shown in FIG. 3, C2 in Table 5 is an interface of the router 330. In other words, the router 330 sends the DPP 3 protocol packet to the router 320 through the interface C2. Similarly, the router 310 may send the DPP 2 protocol packet to the router 330. After receiving the DPP 2, the router 330 may search a corresponding source address record table (not shown) based on "Origin Router ID: ID 1" in the DPP 2, and after finding a corresponding entry, generate a corresponding source address validation entry. For brevity of illustration, this is not shown herein again. In this manner, after a router that is deployed with the DSAV solution in a domain completes sending of a DPP protocol packet originated from the router, a source address validation table (SAV table) may be generated, where a source address validation entry in the source address validation table has, for example, content shown in Table 5.

Therefore, further, each router may perform source address validation on a subsequent packet based on a generated source address validation table. Specifically, a whitelist validation mode or a graylist validation mode may be deployed on an interface of the router, where the whitelist validation mode can block any data packet that reaches the interface and whose source address is unknown, and the graylist validation mode blocks only a data packet that has a known source address but has a mismatched interface, but does not block a data packet that has an unknown source address. It may be understood that blocking may also be referred to as "filtering" or another term, and blocking a data packet may mean discarding the data packet to reject passing of the data packet. Table 6 below shows comparison between the whitelist validation mode and the graylist validation mode.

**Table 6**

| **Source address situation in the data packet** | **Processing result of the whitelist validation mode** | **Processing result of the graylist validation mode** |
|---|---|---|
| A matched prefix exists, and an incoming interface of the data packet also matches an interface recorded in the source address validation entry | Pass | Pass |
| A matched prefix exists, but an incoming interface of the data packet does not match an interface recorded in the source address validation entry | Block | Block |
| No matched prefix exists | Block | Pass |

It can be seen from Table 6 that processing results of the two different validation modes are not completely the same. Therefore, neither of the validation modes can achieve a high-precision target of the distributed source address validation solution, that is, achieve a zero false positive and minimize a false negative, where the zero false positive is used to ensure that a valid data packet is not incorrectly blocked, and reducing the false negative means blocking, as much as possible, a data packet that has a forged source address. To achieve the high-precision target, accuracy and validity of a source address list in the SPA protocol packet and a destination prefix list in the DPP protocol packet are exceedingly important.

In a current network, an interface of a device, for example, the router may use the whitelist validation mode or may use the graylist validation mode. However, the two validation modes cannot implement high-precision source address validation when used alone. One possible way is to correctly combine the whitelist validation mode and the graylist validation mode. This helps eliminate a case such as the false positive. However, currently, there is no solution that enables the device to flexibly and correctly combine and use various source address validation modes based on a probing situation. In addition, a source prefix included in an SPA protocol packet originated from a device may be incomplete. If an address that is "not included in an SPA protocol packet prefix list" is used when a data packet originated from the device is forwarded, the data packet may be incorrectly blocked.

To resolve the foregoing problem and other potential problems, this application provides an address validation solution. A validation device that performs address validation sends a response packet to a sending device, so that the sending device can perform improvement based on the response packet, to improve accuracy and validity of a source address list in an SPA protocol packet and a destination prefix list in a DPP protocol packet, ensure that a subsequent packet is correctly forwarded, and reduce a false positive and a false negative.

FIG. 4 is a schematic diagram of a scenario 400 to which an embodiment of this application is applicable. The scenario 400 includes a sending device 410, a receiving device 420, and a control device 430. In embodiments of this application, the sending device 410 may represent a sender of a packet, the receiving device 420 may represent a receiver of the packet, and the packet herein may be an SPA packet, a DPP packet, a data packet, or the like. The sending device 410 and the receiving device 420 may be implemented as network devices, such as routers, switches, gateway devices, or devices that support a firewall. It should be understood that the sending device 410 and the receiving device 420 may alternatively be implemented as other types. This is not limited in this application. The control device 430 may alternatively be a controller, a centralized diagnostic device, another device that can implement a function of the control device 430 in this embodiment of this application, or the like. The control device 430 may be implemented as a network device, a computing device, or the like. This is not limited in this application. In addition, it should be noted that, although the control device 430 is shown in the scenario 400, the control device 430 alternatively may not be included in some specific scenarios.

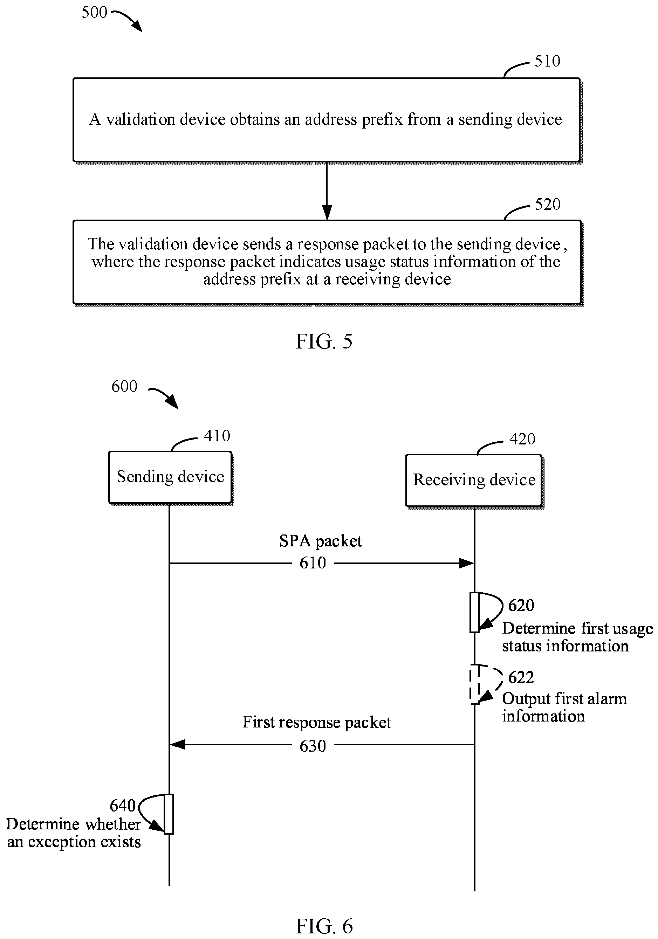

Based on the scenario 400 shown in FIG. 4, the following describes embodiments of this application in detail with reference to FIG. 5 to FIG. 13. In addition, it should be noted that, for brevity of description, in this application, an SPA protocol packet may also be referred to as an SPA packet for short, a DPP protocol packet may also be referred to as a DPP packet for short, a source address prefix may also be referred to as a source prefix for short, and a destination address prefix may also be referred to as a destination prefix for short.

In this application, an address validation mode (referred to as a validation mode for short) used for address validation may include a loose URPF validation mode, a strict URPF validation mode, a whitelist validation mode, and a graylist validation mode. It may be understood that the address validation mode may be configured for an interface of a network device, for example, may be any one of the foregoing validation modes. Therefore, an interface through which a data packet is received may use a configured address validation mode for address validation.

FIG. 5 is a schematic flowchart of a packet transmission method 500 according to some embodiments of this application. A method procedure shown in FIG. 5 may be performed by a validation device, and includes the following steps.

At a block 510, the validation device obtains an address prefix from the sending device 410.

At a block 520, the validation device sends a response packet to the sending device 410, where the response packet indicates usage status information of the address prefix at the receiving device 420.

### Embodiments about a source address prefix

In some embodiments of this application, the address prefix in the block 510 may include the source address prefix, and correspondingly, the response packet in the block 520 may be a first response packet indicating first usage status information of the source address prefix at the receiving device.

In some embodiments, the validation device in FIG. 5 may be implemented as the receiving device 420. FIG. 6 is a signaling interaction diagram of an address validation process 600 according to some embodiments of this application. The process 600 relates to the sending device 410 and the receiving device 420.

In 610, the sending device 410 sends an SPA packet to the receiving device 420, where the SPA packet includes a source address prefix. For the SPA packet, refer to the foregoing related descriptions that are provided with reference to FIG. 1. For brevity, details are not described herein again. Correspondingly, it may be understood that the receiving device 420 may receive the SPA packet from the sending device 410, so that the receiving device 420 may obtain the source address prefix. It may be understood that in this embodiment of this application, the SPA packet may directly reach the receiving device 420 from the sending device 410, or may reach the receiving device 420 from the sending device 410 after passing through one or more relay devices. This is not limited in this application.

In 620, the receiving device 420 determines first usage status information of the source address prefix at the receiving device 420. For example, the receiving device 420 may determine a corresponding forwarding entry that is in a forwarding table of the receiving device 420, and compare the source address prefix with the forwarding entry. Optionally, the receiving device 420 may further determine a corresponding routing entry that is in a routing table of the receiving device 420, and compare the source address prefix with the routing entry. Through comparison, the receiving device 420 may determine the first usage status information.

The first usage status information may indicate any one of the following a1 to a5. a1: The source address prefix has a corresponding forwarding entry at the receiving device 420, and an outgoing interface corresponding to the source address prefix in the forwarding entry is consistent with an incoming interface through which the receiving device 420 receives the SPA packet. a2: The source address prefix has a corresponding forwarding entry at the receiving device 420, and an outgoing interface corresponding to the source address prefix in the forwarding entry is inconsistent with an incoming interface through which the receiving device 420 receives the SPA packet. a3: The source address prefix has no corresponding forwarding entry but has a corresponding routing entry at the receiving device 420, and the routing entry is valid (valid). a4: The source address prefix has no corresponding forwarding entry but has a corresponding routing entry at the receiving device 420, and the routing entry is invalid (invalid). Alternatively, a5: The source address prefix has no corresponding routing entry at the receiving device 420.

Optionally, in some embodiments, as shown in 622 in FIG. 6, the receiving device 420 may further output first alarm information. Specifically, if the receiving device 420 determines, based on the first usage status information, that the source address prefix has an exception at the receiving device 420, the first alarm information may be output to provide a suggestion for a validation mode that is for validating the source address prefix.

For example, if the first usage status information indicates that the source address prefix has the corresponding forwarding entry at the receiving device 420, and the outgoing interface corresponding to the source address prefix in the forwarding entry is inconsistent with the incoming interface through which the receiving device 420 receives the SPA packet, that is, a2, the first alarm information may indicate that a strict URPF validation mode cannot be configured at the receiving device 420.

For example, if the first usage status information indicates the foregoing a2 or a5, the receiving device 420 may determine that the receiving device 420 has an asymmetric routing problem. Optionally, in this case, if the strict URPF validation mode is enabled on the interface through which the receiving device 420 receives the SPA packet, in other words, the interface uses the strict URPF validation mode to validate the source address prefix, the receiving device 420 may output the first alarm information, to prompt a user (for example, a network administrator) of the receiving device 420 to adjust or modify the address validation mode of the interface in time. Further, the user of the receiving device 420 may adjust or modify the address validation mode of the interface in time based on the first alarm information. For example, the receiving device 420 may modify, based on an input of the user, the address validation mode of the interface to a loose URPF validation mode, a whitelist validation mode, or a graylist validation mode. Optionally, in this case, if no source address validation mode is configured on the interface through which the receiving device 420 receives the SPA packet, the receiving device 420 may output the first alarm information, to indicate that the strict URPF validation mode cannot not be configured on the interface. For example, indication information associated with the interface, indicating that, for example, "the strict URPF validation mode is prohibited", may be set. For example, if the user prepares to configure the strict URPF validation mode on the interface after that, the receiving device 420 may reject the configuration, so that the configuration fails, and optionally, configuration failure information may be output to notify the user.

For another example, if the first usage status information indicates that the source address prefix has no corresponding forwarding entry but has the corresponding routing entry at the receiving device 420, and the routing entry is valid, that is, a3, the first alarm information indicates that an incorrect configuration exists at the receiving device 420, where the incorrect configuration prevents the routing entry from generating the forwarding entry; or a processing fault that occurs when the routing entry generates the forwarding entry exists at the receiving device 420. Further, it may be understood that the user of the receiving device 420 may perform subsequent processing based on the first alarm information. For example, the user may modify the incorrect configuration, so that the routing entry normally generates the forwarding entry.

In 630, the receiving device 420 sends a first response packet to the sending device 410, where the first response packet indicates the first usage status information. For example, the first response packet may include a status code, to indicate the first usage status information. This can reduce signaling overheads, reduce transmission bandwidth, and improve transmission efficiency. For example, it may be assumed that status codes that are in one-to-one correspondence with the foregoing a1 to a5 are respectively 1 to 5.

Optionally, in some examples, the first usage status information may indicate a4: The source address prefix has no corresponding forwarding entry but has the corresponding routing entry at the receiving device 420, and the routing entry is invalid. Optionally, the receiving device 420 may further determine a reason why the routing entry is invalid, and the first response packet may further indicate the reason for the invalidity by using a first sub-status code or a second sub-status code. For example, the first sub-status code (for example, 1) may indicate that the reason for the invalidity is that the routing entry has an invalid next hop. For example, the second sub-status code (for example, 2) may indicate that the reason for the invalidity is that the routing entry has an invalid routing attribute type. For example, a first field in the first response packet includes 4, and a second field includes 1, where the first field indicates the status code, and the second field indicates the sub-status code. In this case, the sending device 410 reads 4 from the first field and reads 1 from the second field, and may learn that "the source address prefix has no corresponding forwarding entry but has the corresponding routing entry at the receiving device 420, and the routing entry is invalid" and "the routing entry has the invalid next hop".

In some embodiments of this application, the first response packet in 630 may be understood as a feedback packet of the SPA packet. Optionally, the first response packet may include content shown in Table 7 below.

**Table 7**

| |
|---|
| Packet type (Type) |
| Packet length (Length) |
| Source prefix (Source Prefix) |
| Status code related to the first usage status information |
| Some descriptions related to the status code (optional) |

For example, the packet type in Table 7 may represent feedback of a usage status of the source prefix, the packet length may represent a total quantity of bytes (or a total quantity of bits) occupied by the first response packet, and the source prefix may represent a source prefix whose usage status is indicated by the first response packet. In addition, optionally, as shown in Table 7, the first response packet may further include some descriptions related to the status code, for example, the foregoing sub-status code.

Correspondingly, it may be understood that the sending device 410 may receive the first response packet from the receiving device 420. Further, in 640, the sending device 410 determines, based on the first response packet, whether the source address prefix has an exception at the sending device 410. Optionally, if the sending device 410 determines that the exception exists, the sending device 410 performs modification or provides a modification suggestion for a user.

For example, if the first response packet includes a status code (for example, 1) corresponding to a1, the sending device 410 may determine that the source address prefix is normal at the sending device 410. For example, if the first response packet includes a status code (for example, 2) corresponding to a2, the sending device 410 may determine that the source address prefix is normal at the sending device 410, and optionally, the sending device 410 may determine that the receiving device 420 has the asymmetric routing problem. For example, if the first response packet includes a status code (for example, 3) corresponding to a3, the sending device 410 may determine that the source address prefix has the exception at the receiving device 420. For example, if the first response packet includes a status code (for example, 4) corresponding to a4, the sending device 410 may determine that the source address prefix may have the exception at the sending device 410. For example, if the first response packet includes a status code (for example, 5) corresponding to a5, the sending device 410 may determine that the source address prefix is normal at the sending device 410. For example, in a scenario in which the sending device 410 is multi-homed to a plurality of receiving devices in a network, a case of a5 may occur. Because the sending device 410 sends a route corresponding to the source address prefix to only some of the plurality of receiving devices, but does not send the route to the receiving device 420, asymmetric routing exists at the receiving device 420.

For example, if the first response packet includes the status code (for example, 4) corresponding to a4 and the first sub-status code (for example, 1), the sending device 410 may determine that the first usage status information is indicated as a4, and the routing entry has the invalid next hop. In this case, the sending device 410 may modify a configuration that causes the invalid next hop, and resend routing information corresponding to the source address prefix to the receiving device 420 based on the modification.

For example, if the first response packet includes the status code (for example, 5) corresponding to a5, the sending device 410 may determine that the first usage status information is indicated as a5: The source prefix has no corresponding routing entry at the receiving device 420. In this case, the sending device 410 may check a reason why the source prefix is not advertised to the receiving device 420. For example, if the sending device 410 finds that the source prefix is not intentionally set to be not advertised to the receiving device 420, but is not advertised to the receiving device 420 due to an incorrect configuration at the sending device 410, the sending device 410 may modify the incorrect configuration or provide a modification suggestion for the user.

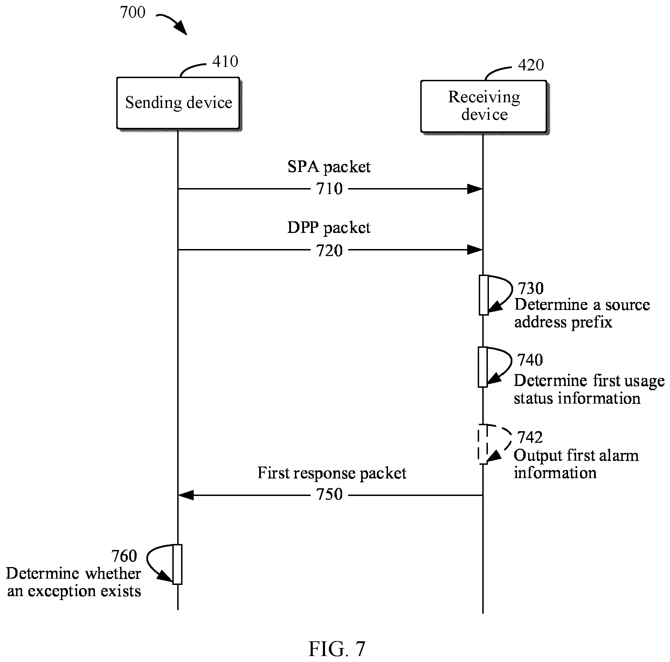

FIG. 7 is a signaling interaction diagram of an address validation process 700 according to some embodiments of this application. The process 700 relates to the sending device 410 and the receiving device 420.

In 710, the sending device 410 sends an SPA packet to the receiving device 420, where the SPA packet includes an identifier of the sending device 410 and a source address prefix. For the SPA packet, refer to the foregoing related descriptions that are provided with reference to FIG. 1. For brevity, details are not described herein again. Correspondingly, it may be understood that the receiving device 420 may receive the SPA packet from the sending device 410.

In 720, the sending device 410 sends a DPP packet to the receiving device 420, where the DPP packet includes the identifier of the sending device 410. For the DPP packet, refer to the foregoing related descriptions that are provided with reference to FIG. 2. For brevity, details are not described herein again. Correspondingly, it may be understood that the receiving device 420 may receive the DPP packet from the sending device 410.

In 730, the receiving device 420 determines the source address prefix based on the DPP packet and the SPA packet. Specifically, the receiving device 420 may determine, from the SPA packet based on the identifier that is of the sending device 410 and that is in the DPP packet, a source address prefix corresponding to the identifier.

In 740, the receiving device 420 determines first usage status information of the source address prefix at the receiving device 420. Optionally, in some embodiments, as shown in 742 in FIG. 7, the receiving device 420 may further output first alarm information.

In 750, the receiving device 420 sends a first response packet to the sending device 410, where the first response packet indicates the first usage status information. In 760, the sending device 410 determines, based on the first response packet, whether the source address prefix has an exception at the sending device 410. Optionally, if the sending device 410 determines that the exception exists, the sending device 410 performs modification or provides a modification suggestion for a user.

For example, for specific embodiments of the processes 740 to 760 in FIG. 7, refer to the foregoing processes 620 to 640 described with reference to FIG. 6. For brevity, details are not described herein again.

In the embodiments described with reference to FIG. 6 and FIG. 7, the first response packet indicating the first usage status information about the source address prefix may be sent by the receiving device 420 to the sending device 410, so that validity of the source address prefix can be improved based on this. This can avoid a false positive and a false negative of a packet, and improve accuracy of address validation.

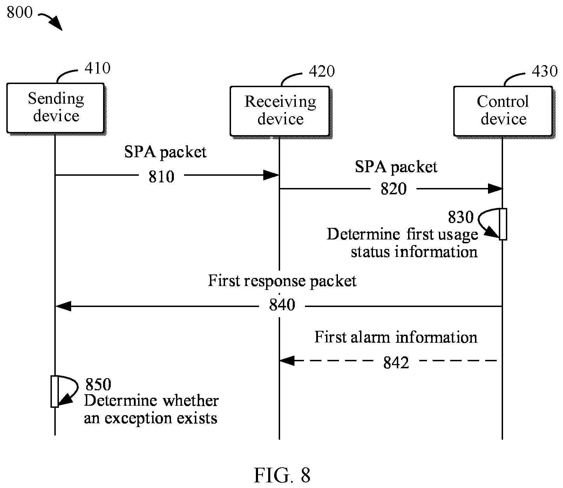

In some embodiments, the validation device in FIG. 5 may be implemented as the control device 430. FIG. 8 is a signaling interaction diagram of an address validation process 800 according to some embodiments of this application. The process 800 relates to the sending device 410, the receiving device 420, and the control device 430.

In 810, the sending device 410 sends an SPA packet to the receiving device 420, where the SPA packet includes a source address prefix. In 820, the receiving device 420 forwards the SPA packet to the control device 430. In this manner, the control device 430 may receive, from the receiving device 420, the SPA packet that is from the sending device 410, and the SPA packet includes the source address prefix. For the SPA packet, refer to the foregoing related descriptions that are provided with reference to FIG. 1. For brevity, details are not described herein again.

In 830, the control device 430 determines first usage status information of the source address prefix at the receiving device 420. In some examples, the control device 430 may obtain a routing table and a forwarding table of the receiving device 420 in advance, and the control device 430 may determine the first usage status information by comparing the source address prefix with a corresponding routing entry and/or forwarding entry. It may be understood that a specific manner in which the control device 430 obtains the routing table and the forwarding table of the receiving device 420 is not limited in this application. For example, the control device 430 may be a central device having a management function, where a routing table and a forwarding table of each network device that is managed by the control device 430 are pre-stored on the control device 430. Alternatively, for example, the receiving device 420 may synchronize the routing table and the forwarding table of the receiving device 420 to the control device 430 in real time.

For a specific embodiment of the first usage status information, refer to the foregoing related descriptions that are provided in 620 with reference to FIG. 6. For brevity, details are not described herein again.

In 840, the control device 430 sends a first response packet to the sending device 410, where the first response packet indicates the first usage status information. In 850, the sending device 410 determines, based on the first response packet, whether the source address prefix has an exception at the sending device 410. Optionally, if the sending device 410 determines that the exception exists, the sending device 410 performs modification or provides a modification suggestion for a user. For example, for specific embodiments of the first response packet indicating the first usage status information and the process 850, refer to similar content in the processes 630 and 640 described with reference to FIG. 6. For brevity, details are not described herein again.

Optionally, in some embodiments, in 842, the control device 430 sends first alarm information to the receiving device 420, to provide a suggestion for a validation mode that is for validating the source address prefix that is at the receiving device 420. For example, the first alarm information may indicate that a strict URPF validation mode cannot be configured at the receiving device 420. For example, the first alarm information may indicate that an incorrect configuration exists at the receiving device 420, where the incorrect configuration prevents the routing entry from generating the forwarding entry; or a processing fault that occurs when the routing entry generates the forwarding entry exists at the receiving device 420. Further, a user of the receiving device 420 may perform subsequent processing based on the first alarm information.

For the first alarm information, refer to the foregoing related content described in 622 with reference to FIG. 6. For brevity, details are not described herein again.

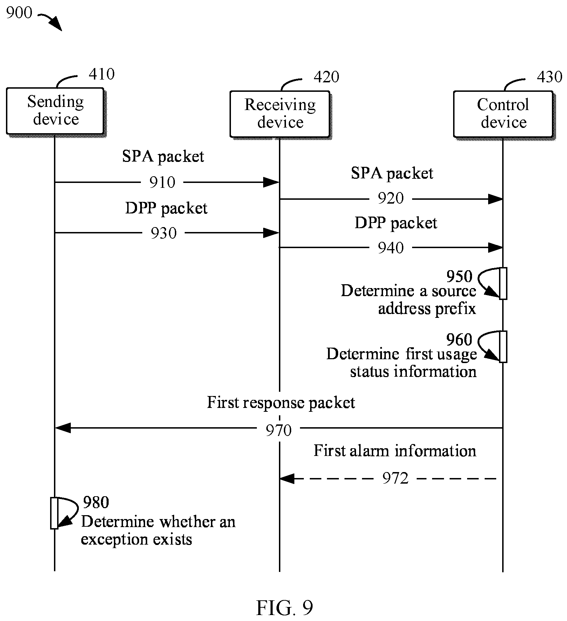

FIG. 9 is a signaling interaction diagram of an address validation process 900 according to some embodiments of this application. The process 900 relates to the sending device 410, the receiving device 420, and the control device 430.

In 910, the sending device 410 sends an SPA packet to the receiving device 420, where the SPA packet includes an identifier of the sending device 410 and a source address prefix. In 920, the receiving device 420 forwards the SPA packet to the control device 430.

In 930, the sending device 410 sends a DPP packet to the receiving device 420, where the DPP packet includes the identifier of the sending device 410. In 940, the receiving device 420 forwards the DPP packet to the control device 430.

In 950, the control device 430 determines the source address prefix based on the DPP packet and the SPA packet. Specifically, the control device 430 may determine, from the SPA packet based on the identifier that is of the sending device 410 and that is in the DPP packet, a source address prefix corresponding to the identifier.

In 960, the control device 430 determines first usage status information of the source address prefix at the receiving device 420.

In 970, the control device 430 sends a first response packet to the sending device 410, where the first response packet indicates the first usage status information. In 980, the sending device 410 determines, based on the first response packet, whether the source address prefix has an exception at the sending device 410.

Optionally, in some embodiments, in 972, the control device 430 sends first alarm information to the receiving device 420.

It should be understood that, for the process 900, refer to similar terms and similar processes in the foregoing embodiments. To avoid repetition, details are not described herein again.

In the embodiments described with reference to FIG. 8 and FIG. 9, the first response packet indicating the first usage status information about the source address prefix may be sent by the control device 430 to the sending device 410, so that validity of the source address prefix can be improved based on this. This can avoid a false positive and a false negative of a packet, and improve accuracy of address validation.

### Embodiments about a destination address prefix

In some embodiments of this application, the address prefix in the block 510 may include the destination address prefix, and correspondingly, the response packet in the block 520 may be a second response packet indicating second usage status information of the destination address prefix at the receiving device.

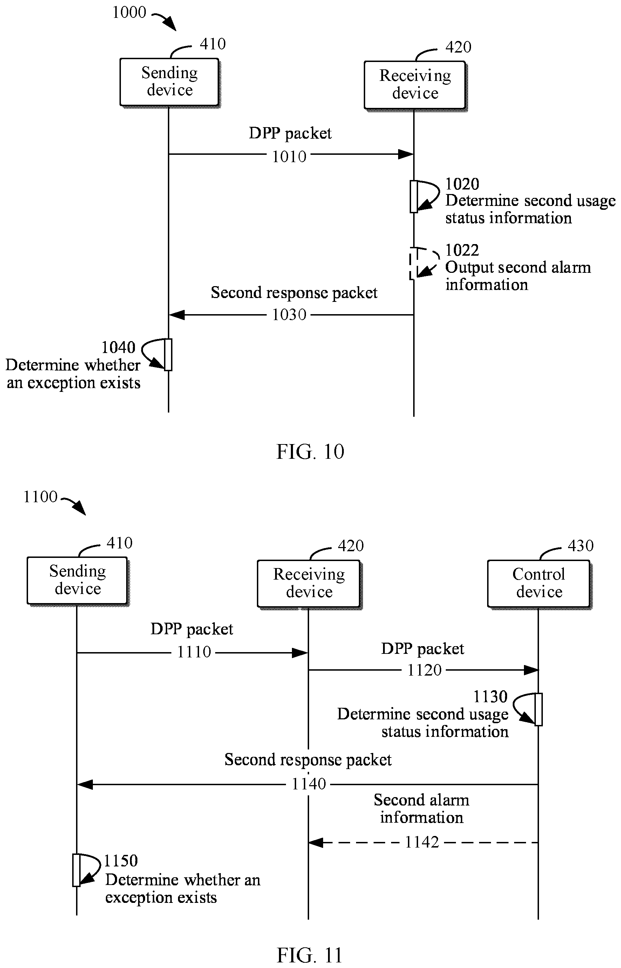

In some embodiments, the validation device in FIG. 5 may be implemented as the receiving device 420. FIG. 10 is a signaling interaction diagram of an address validation process 1000 according to some embodiments of this application. The process 1000 relates to the sending device 410 and the receiving device 420.

In 1010, the sending device 410 sends a DPP packet to the receiving device 420, where the DPP packet includes a destination address prefix. For the DPP packet, refer to the foregoing related descriptions that are provided with reference to FIG. 2. For brevity, details are not described herein again. Correspondingly, it may be understood that the receiving device 420 may receive the DPP packet from the sending device 410.

In 1020, the receiving device 420 determines second usage status information of the destination address prefix at the receiving device 420. For example, the receiving device 420 may determine a corresponding forwarding entry that is in a forwarding table of the receiving device 420, and compare the destination address prefix with the forwarding entry. Optionally, the receiving device 420 may further determine a corresponding routing entry that is in a routing table of the receiving device 420, and compare the destination address prefix with the routing entry. Through comparison, the receiving device 420 may determine the second usage status information.

The second usage status information may indicate any one of the following b1 to b5. b1: The destination address prefix has a corresponding forwarding entry at the receiving device 420, and a routing entry used to generate the forwarding entry originates from the receiving device 420. b2: The destination address prefix has a corresponding forwarding entry at the receiving device 420, and an interface to a next hop in a routing entry used to generate the forwarding entry is of a first type, where the first type indicates that a next-hop device supports DSAV. b3: The destination address prefix has a corresponding forwarding entry at the receiving device 420, and an interface to a next hop in a routing entry used to generate the forwarding entry is of a second type, where the second type indicates that a next-hop device does not support DSAV. b4: The destination address prefix has no corresponding forwarding entry but has a corresponding routing entry at the receiving device 420. Alternatively, b5: The destination address prefix has no corresponding routing entry at the receiving device 420.

In some examples, an interface of the first type may also be referred to as an intra-domain interface, indicating that a network device in which the interface is located supports the DSAV, and another network device connected to the interface also supports the DSAV. In another understanding, both the network device in which the interface is located and the another network device connected to the interface belong to devices in a management domain of a DSAV solution.

In some examples, an interface of the second type may also be referred to as an out-of-domain interface, indicating that a network device in which the interface is located supports the DSAV, and another network device connected to the interface does not support the DSAV. In another understanding, the network device in which the interface is located belongs to a device in the management domain of the DSAV solution, but the another network device connected to the interface does not belong to a device (that is, an out-of-domain device) in the management domain of the DSAV solution.

Optionally, in some embodiments, as shown in 1022 in FIG. 10, the receiving device 420 may further output second alarm information. Specifically, if the receiving device 420 determines, based on the second usage status information, that the destination address prefix has an exception at the receiving device 420, the second alarm information may be output to provide a suggestion for a validation mode that is for validating the destination address prefix.

For example, if the second usage status information indicates that the destination address prefix has no corresponding forwarding entry but has the corresponding routing entry at the receiving device 420, that is, b4, the second alarm information indicates that an incorrect configuration exists at the receiving device 420, where the incorrect configuration prevents the routing entry from generating the forwarding entry; or a processing fault that occurs when the routing entry generates the forwarding entry exists at the receiving device 420. Further, it may be understood that a user of the receiving device 420 may perform subsequent processing based on the second alarm information. For example, the user may modify the incorrect configuration, so that the routing entry normally generates the forwarding entry.

For example, if the second usage status information indicates that the destination address prefix has no corresponding routing entry at the receiving device 420, that is, b5, the second alarm information indicates that the routing entry at the sending device 410 is not synchronized with that at the receiving device 420, and the fault needs to be processed at the sending device 410.

In 1030, the receiving device 420 sends a second response packet to the sending device 410, where the second response packet indicates the second usage status information. For example, the second response packet may include a status code, to indicate the second usage status information. This can reduce signaling overheads, reduce transmission bandwidth, and improve transmission efficiency. For example, it may be assumed that status codes that are in one-to-one correspondence with the foregoing b1 to b5 are respectively 11 to 15.

In some embodiments of this application, the second response packet in 1030 may be understood as a feedback packet of the DPP packet. Optionally, the second response packet may include content shown in Table 8 below.

**Table 8**

| |
|---|
| Packet type (Type) |
| Packet length (Length) |
| Destination prefix (Destination Prefix) |
| Status code related to the second usage status information |
| Some descriptions related to the status code (optional) |

For example, the packet type in Table 8 may represent feedback of a usage status of the destination prefix, the packet length may represent a total quantity of bytes (or a total quantity of bits) occupied by the second response packet, and the destination prefix may represent a destination prefix whose usage status is indicated by the second response packet. In addition, optionally, as shown in Table 8, the second response packet may further include some descriptions related to the status code.

Correspondingly, it may be understood that the sending device 410 may receive the second response packet from the receiving device 420. Further, in 1040, the sending device 410 determines, based on the second response packet, whether the destination address prefix has an exception at the sending device 410. Optionally, if the sending device 410 determines that the exception exists, the sending device 410 performs modification or provides a modification suggestion for a user.

For example, if the second response packet includes a status code (for example, 11, 12, or 13) corresponding to b1, b2, or b3, the sending device 410 may determine that the destination address prefix is normal at the sending device 410. For example, if the second response packet includes a status code (for example, 14) corresponding to b4, the sending device 410 may determine that the destination address prefix may have the exception at the receiving device 420.

For example, if the second response packet includes a status code (for example, 15) corresponding to b5, the sending device 410 may determine that the destination address prefix has the exception at the sending device 410 or the receiving device 420. For example, b5 indicates that the routing entry at the sending device 410 is not synchronized with that at the receiving device 420, and a reason for the fault may be that the receiving device 420 may not send a withdrawal message to the sending device 410 in time, or the sending device 410 may not correctly process a withdrawal message from the receiving device 420, where the withdrawal message indicates the sending device 410 to withdraw routing information corresponding to the destination address prefix. Further, the sending device 410 may clear the routing information corresponding to the destination address prefix. In other words, if the sending device 410 receives the second response packet from the receiving device 420, and the second response message indicates b5, the sending device 410 may determine that a case in which the routing entries are not synchronized exists. Therefore, the sending device 410 may determine, based on a source (that is, the receiving device 420) of the second response packet, that a route corresponding to the destination address prefix is a zombie route (that is, a route that should be withdrawn but has not been withdrawn), and clear the zombie route.

In some embodiments, the validation device in FIG. 5 may be implemented as the control device 430. FIG. 11 is a signaling interaction diagram of an address validation process 1100 according to some embodiments of this application. The process 1100 relates to the sending device 410, the receiving device 420, and the control device 430.

In 1110, the sending device 410 sends a DPP packet to the receiving device 420, where the DPP packet includes a destination address prefix. In 1120, the receiving device 420 forwards the DPP packet to the control device 430. In this manner, the control device 430 may receive, from the receiving device 420, the DPP packet that is from the sending device 410, and the DPP packet includes the destination address prefix. For the DPP packet, refer to the foregoing related descriptions that are provided with reference to FIG. 2. For brevity, details are not described herein again.

In 1130, the control device 430 determines second usage status information of the destination address prefix at the receiving device 420. In some examples, the control device 430 may obtain a routing table and a forwarding table of the receiving device 420 in advance, and the control device 430 may determine the second usage status information by comparing the destination address prefix with a corresponding routing entry and/or forwarding entry.

In 1140, the control device 430 sends a second response packet to the sending device 410, where the second response packet indicates the second usage status information. In 1150, the sending device 410 determines, based on the second response packet, whether the destination address prefix has an exception at the sending device 410. Optionally, if the sending device 410 determines that the exception exists, the sending device 410 performs modification or provides a modification suggestion for a user.

Optionally, in some embodiments, in 1142, the control device 430 sends second alarm information to the receiving device 420, to provide a suggestion for a validation mode that is for validating the destination address prefix that is at the receiving device 420. For example, the second alarm information may indicate that an incorrect configuration exists at the receiving device 420, where the incorrect configuration prevents the routing entry from generating the forwarding entry; or a processing fault that occurs when the routing entry generates the forwarding entry exists at the receiving device 420. Further, a user of the receiving device 420 may perform subsequent processing based on the second alarm information.

It should be understood that, for the process 1100, refer to similar terms and similar processes in the foregoing embodiments. To avoid repetition, details are not described herein again.

In the embodiments described with reference to FIG. 10 and FIG. 11, the second response packet indicating the second usage status information about the destination address prefix may be sent by the receiving device 420 or the control device 430 to the sending device 410, so that validity of the destination address prefix can be improved based on this. This can avoid a false positive and a false negative of a packet, and improve accuracy of address validation.

As shown in FIG. 5, the address prefix in the block 510 may be the source address prefix, and the response packet in the block 520 may be the first response packet indicating the first usage status information of the source address prefix at the receiving device. Optionally, the method may further include: The validation device obtains the destination address prefix from the sending device 410. The validation device sends the second response packet to the sending device 410, where the second response packet indicates the second usage status information of the destination address prefix at the receiving device 420. In an example, the destination address prefix from the sending device 410 may be obtained after the block 520. In some embodiments, the validation device is the receiving device 420. With reference to the foregoing embodiments, it may be understood that 1010 to 1040 shown in FIG. 10 may be further included on a basis of the process 600 shown in FIG. 6. In some embodiments, the validation device is the control device 430. With reference to the foregoing embodiments, it may be understood that 1110 to 1150 shown in FIG. 11 may be further included on a basis of the process 800 shown in FIG. 8. In another example, the source address prefix and the destination address prefix may be obtained in the block 510. For example, the source address prefix and the destination address prefix may be obtained based on the DPP packet. Correspondingly, it may be understood that the second response packet may be sent in the block 520 or before or after the block 520. In some embodiments, the validation device is the receiving device 420. With reference to the foregoing embodiments, it may be understood that 1020 to 1040 shown in FIG. 10 may be further included on a basis of the process 700 shown in FIG. 7. In some embodiments, the validation device is the control device 430. With reference to the foregoing embodiments, it may be understood that 1120 to 1150 shown in FIG. 11 may be further included on a basis of the process 900 shown in FIG. 9. In this manner, the validation device may validate the source address prefix and the destination address prefix, so that the sending device 410 may perform improvement based on the first response packet and the second response packet, to ensure validity of the source address prefix and the destination address prefix.

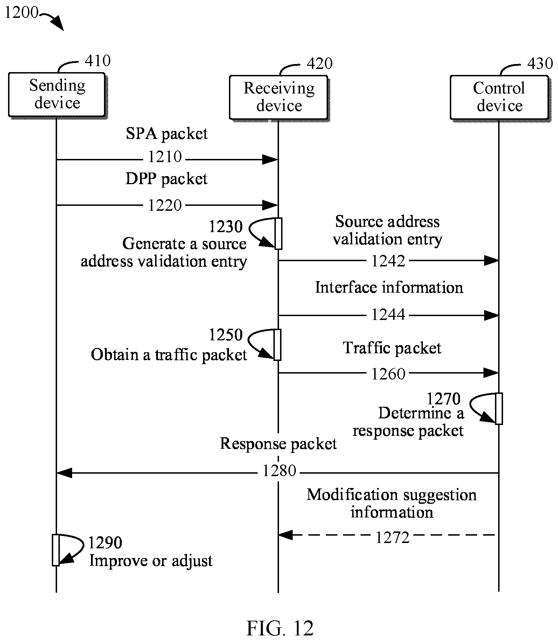

Still refer to FIG. 5. In some embodiments of this application, the address prefix in the block 510 may be the source address prefix, the validation device may be the control device 430, and the response packet in the block 520 may indicate the usage status information of the source address prefix at the receiving device, where the usage status information indicates that a data packet having the source address prefix is filtered at an interface that is of the receiving device 420 and that supports DSAV. FIG. 12 is a signaling interaction diagram of an address validation process 1200 according to some embodiments of this application. The process 1200 relates to the sending device 410, the receiving device 420, and the control device 430.

In 1210, the sending device 410 sends an SPA packet to the receiving device 420. In 1220, the sending device 410 sends a DPP packet to the receiving device 420. For the SPA packet and the DPP packet, refer to the foregoing related records that are provided with reference to FIG. 1 and FIG. 2. Details are not described herein again.

In 1230, the receiving device 420 generates a source address validation entry. Specifically, the receiving device 420 may generate the source address validation entry based on the DPP packet and the SPA packet. For example, the source address validation entry may include a source address prefix, an incoming interface, a sequence number, and the like. In some examples, for a process of generating the source address validation entry, refer to the foregoing related descriptions in a part of generating Table 5. For brevity, details are not described herein again.

In 1242, the receiving device 420 sends the source address validation entry to the control device 430. In 1244, the receiving device 420 sends interface information to the control device 430, where the interface information includes information about a validation mode configured for each interface of the receiving device 420. For example, the interface information may include a correspondence between an identifier of each interface and a validation mode of the interface. For example, the interface information may indicate that one or more interfaces of the receiving device 420 are configured as DSAV validation modes.

It may be understood that 1242 and 1244 in FIG. 12 may be implemented to have one or more packets. This is not limited in this application. For example, the source address validation entry and the interface information may be sent by using a single packet. For example, sending may be performed respectively by using two packets. For example, the source address validation entry is sent by using a first packet, and the interface information is sent by using a second packet. For example, sending may be performed respectively by using three packets. For example, the source address validation entry is sent by using a first packet, interface information of some interfaces is sent by using a second packet, and interface information of other interfaces is sent by using a third packet.

In 1250, the receiving device 420 obtains a traffic packet through traffic sampling. Specifically, the receiving device 420 may perform traffic sampling on an interface that is of the receiving device 420 and that supports DSAV, to obtain the traffic packet. In some examples, the traffic packet may also be referred to as a sampling packet. In 1260, the receiving device 420 sends the traffic packet to the control device 430. The traffic packet in this application may include forwarding statuses of a plurality of source address prefixes at the receiving device 420. For example, the receiving device 410 receives a plurality of data packets in a form of traffic. For example, a data packet 1 in the plurality of data packets may be sampled, to obtain a source address prefix 1 and an incoming interface 1 of the data packet 1, and a processing result 1 (for example, passing or blocking) of the receiving device 420 for the data packet 1. For example, a data packet 2 in the plurality of data packets may be sampled, to obtain a source address prefix 2 and an incoming interface 2 of the data packet 2, and a processing result 2 (for example, passing or blocking) of the receiving device 420 for the data packet 2. A sampling manner in this application may be periodic sampling. For example, sampling is performed every S data packets. For example, sampling is performed every T seconds. Alternatively, another sampling manner may be used. This is not limited in this application.

In 1270, the control device 430 determines a response packet. Specifically, the control device 430 may analyze the traffic packet based on the source address validation entry and the interface information, to obtain the response packet.

For example, the analysis performed by the control device 430 on the traffic packet may include: extracting a source address prefix and an incoming interface that are in the traffic packet and that correspond to a processing result of "blocking", and determining a status of the source address prefix that is at the sending device 410. For example, it is assumed that the traffic packet includes "the data packet 1, the source address prefix 1, the incoming interface 1, and the processing result 1", where the processing result 1 is blocking. In other words, the incoming interface 1 of the receiving device 420 blocks the data packet 1 having the source address prefix 1. In other words, the incoming interface 1 blocks (or filters, discards, or the like) the data packet having the source address prefix 1. Further, the control device 430 may determine whether the source address prefix 1 belongs to a prefix of an origin source address of the sending device 410 or a prefix of a source address that validly passes through the sending device 410. For example, if the control device 430 finds, through analysis, that a source address (for example, having the source address prefix 1) of a data packet filtered by an interface (for example, the incoming interface 1) of the receiving device 420 belongs to the origin source address of the sending device 410 or the source address that validly passes through the sending device 410, the control device 430 may generate the response packet, and the response packet indicates usage status information of the source address prefix (for example, the source address prefix 1) at the receiving device 420, where the usage status information indicates that a data packet having a valid source address prefix is filtered by the interface (for example, the incoming interface 1) of the receiving device 420.

In 1280, the control device 430 sends the response packet to the sending device 410.

Further, it may be understood that, in 1290, the sending device 410 may improve or adjust the source address prefix based on the response packet. For example, a user of the sending device 410 may supplement a previously omitted source address prefix based on the response packet. In addition, optionally, the sending device 410 may resend the SPA packet and/or the DPP packet based on the improved or adjusted source address prefix.

Optionally, in some embodiments, as shown in FIG. 12, in 1272, the control device 430 may further send modification suggestion information to the receiving device 420, where the modification suggestion information is used to suggest adjusting a validation mode of the interface that is of the receiving device 420 and that supports the DSAV. Optionally, the receiving device 420 may modify the validation mode of the indicated interface based on the modification suggestion information.

For example, if the control device 430 determines that source addresses of packets filtered by an interface of the receiving device 420 belongs to the origin source address of the sending device 410 or the source address that validly passes through the sending device 410, and the interface for filtering these packets has been enabled with a whitelist validation mode or a strict URPF validation mode, the modification suggestion information may suggest that a validation mode of the interface of the receiving device 420 being adjusted to a graylist validation mode. In other words, the control device 430 may determine that source address probing of the interface is insufficient, and therefore the currently enabled validation mode is not appropriate, so that the receiving device 420 may be suggested adjusting the validation mode of the interface.

In this manner, the control device 430 may determine, based on the traffic packet obtained through sampling, a processing status of the interface of the receiving device 420 for the source address prefix, to determine whether an address validation manner of the receiving device 420 is proper. The control device 430 may notify, based on the foregoing result, the sending device 410 and/or the receiving device 420 to perform proper adjustment or modification. This can ensure that a subsequent data packet is correctly processed, to avoid a false positive or a false negative.

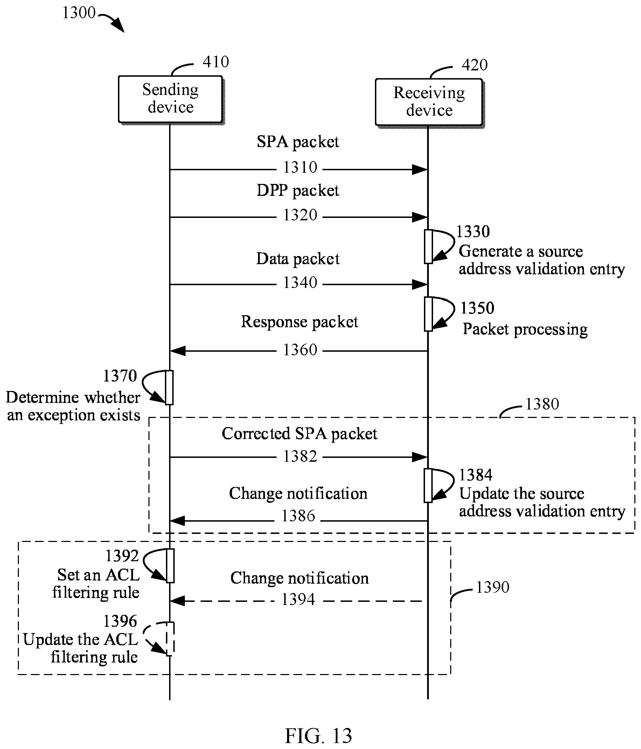

Still refer to FIG. 5. In some embodiments of this application, the address prefix in the block 510 may be the source address prefix, the validation device may be the receiving device 420, and the response packet in the block 520 may indicate the usage status information of the source address prefix at the receiving device, where the usage status information indicates a validation mode of an incoming interface corresponding to a data packet having the source address prefix. FIG. 13 is a signaling interaction diagram of an address validation process 1300 according to some embodiments of this application. The process 1300 relates to the sending device 410 and the receiving device 420.

In 1310, the sending device 410 sends an SPA packet to the receiving device 420, where the SPA packet includes a source address prefix. In 1320, the sending device 410 sends a DPP packet to the receiving device 420. For the SPA packet and the DPP packet, refer to the foregoing related records that are provided with reference to FIG. 1 and FIG. 2. Details are not described herein again.

In 1330, the receiving device 420 generates a source address validation entry. Specifically, the receiving device 420 may generate the source address validation entry based on the DPP packet and the SPA packet. For example, the source address validation entry may include the source address prefix, an incoming interface, a sequence number, and the like. In some examples, for a process of generating the source address validation entry, refer to the foregoing related descriptions in a part of generating Table 5. For brevity, details are not described herein again.

For ease of description, with reference to Table 5, it may be assumed that an interface B1 of the receiving device 420 is an interface for communicating with the sending device 410. In other words, the receiving device 420 receives the SPA packet and the DPP packet from the sending device 410 through the interface B1. In addition, it may be assumed that a graylist validation mode is configured for the interface B1. In addition, it may be further assumed that another interface (for example, the interface B2 in Table 5) of the receiving device 420 similarly (for example, receiving an SPA packet and a DPP packet from another sending device) completes a source address validation process.

In 1340, the sending device 410 sends a data packet to the receiving device 420. For example, a source address of the data packet has a first source address prefix. In addition, it may be further assumed that an incoming interface through which the receiving device 420 receives the data packet is a first incoming interface. Optionally, the first incoming interface is the same as an incoming interface, for example, the interface B1, through which the receiving device 420 receives the SPA packet.

In 1350, the receiving device 420 processes the data packet. Specifically, the receiving device 420 may determine the source address of the data packet, and query, based on the source address, for a source address validation entry that is at the receiving device 420.

In some examples, it is assumed that the receiving device 420 determines that the source address validation entry includes the first source address prefix, and therefore an incoming interface corresponding to the first source address prefix in the source address validation entry may be further obtained, where it is assumed that the incoming interface is a second incoming interface. Optionally, if the receiving device 420 determines that the second incoming interface corresponding to the first source address prefix in the source address validation entry does not include the first incoming interface, and the graylist validation mode is configured for the first incoming interface, the receiving device 420 discards the data packet.

For example, it is assumed that the first incoming interface through which the receiving device 420 receives the data packet is the interface B1. With reference to Table 5, it is assumed that a source address prefix, that is, "a prefix set such as P1 originating from a router 310" does not include the first source address prefix, and a source address prefix, that is, "a prefix set such as P3 originating from a router 330" includes the first source address prefix. The receiving device 420 may further determine the second incoming interface, that is, B2, that corresponds to "the prefix set such as P3 originating from the router 330" and that is in the address validation entry. Because B2 is different from B1, and the graylist validation mode is configured for the interface B1, the receiving device 420 blocks the data packet, that is, discards the data packet.

In 1360, the receiving device 420 sends a response packet to the sending device 410. Specifically, if an incoming interface (for example, B2 in Table 5) corresponding to a source address prefix of the data packet in the source address validation entry does not include the incoming interface (for example, B1) through which the receiving device 420 receives the data packet, the receiving device 420 may send the response packet to the sending device 410. The response packet may indicate usage status information of the source address prefix at the receiving device 420. Specifically, the response packet indicates that the incoming interface (that is, B2) corresponding to the source address prefix of the data packet in the source address validation entry is different from the incoming interface (that is, B1) through which the data packet is received, and the graylist validation mode is configured for the incoming interface (that is, B1) through which the data packet is received. It may be understood that the response packet may include the first source address prefix, to indicate the incoming interface (that is, B1) of the data packet to block a data packet having the first source address prefix.

In some examples, the response packet may also be referred to as a graylist notification message, and the graylist notification message may include content shown in Table 9 below.

**Table 9**

| |
|---|
| Packet type (Type) |
| Packet length (Length) |
| Graylist prefix (Block Prefix) |
| Action (Action) |

For example, the packet type in Table 9 may represent the graylist notification message, the packet length may represent a total quantity of bytes (or a total quantity of bits) occupied by the graylist notification message, and the graylist prefix may represent a source address prefix of the data packet blocked by the interface B1. In addition, optionally, as shown in Table 9, the graylist notification message may further include the action (a first action or a second action). For example, the first action indicates addition, and the second action indicates removal. Specifically, the first action indicates that an address prefix in the "graylist prefix" is added to the source prefix blocked by the interface B 1, and the second action indicates that the address prefix in the "graylist prefix" is removed from the source prefix blocked by the interface B1. In an example, for the graylist notification message in 1360, the "graylist prefix" in the graylist notification message includes a first address prefix, and the "action" in the graylist notification message is the first action (for example, represented as 0).

In 1370, the sending device 410 determines, based on the response packet, whether the source address prefix has an exception. In some examples, the sending device 410 may determine whether omission exists when the first source address prefix is processed. There may be two different cases. Case 1: The sending device 410 determines that the omission exists when the first source address prefix is processed. Case 2: The sending device 410 determines that no omission exists.

Optionally, in some embodiments, if it is determined in 1370 that the case is the case 1, 1380 may be performed, and includes 1382 to 1386.

In 1382, the sending device 410 sends a corrected SPA packet to the receiving device 420, where the SPA packet includes the first source address prefix. Specifically, if the sending device 410 finds that omission exists when the source address prefix is processed previously, that is, the first address prefix is omitted, the sending device 410 may resend the corrected SPA packet. Correspondingly, it may be understood that the receiving device 420 may receive the corrected SPA packet from the sending device 410.

In 1384, the receiving device 420 updates the source address validation entry based on the corrected SPA packet. With reference to 1350 and 1360, it may be understood that in the updated source address validation entry, the "first source address prefix" is further added to a source prefix corresponding to the incoming interface B1.

In 1386, the receiving device 420 sends a change notification to the sending device 410, where the change notification indicates that the first source address prefix of the data packet is no longer a graylist entry of the incoming interface B1. In some examples, the change notification may include content similar to that in the graylist notification message shown in Table 9. For example, a "graylist prefix" in the change notification includes the first address prefix, and an "action" in the change notification is the second action (for example, represented as 1), to indicate that the first address prefix has been removed from the graylist entry of the incoming interface B1.

In this manner, the sending device 410 may determine, based on the response packet from the receiving device 420, whether the exception (for example, the omission) exists when the source address prefix is processed previously. Therefore, when the omission is found, correction may be performed in time. This can avoid an improper false positive of the data packet. In other words, the false positive can be reduced.

Optionally, in some embodiments, if it is determined in 1370 that the case is the case 2, 1390 may be performed, and includes 1392 to 1396.

In 1392, the sending device 410 sets an ACL filtering rule on an interface through which the response packet is received. Specifically, it is assumed that the interface through which the sending device 410 receives the response packet (that is, the graylist notification message) is a third incoming interface (for example, A1), the sending device 410 may set the ACL filtering rule on the third incoming interface. Then, the sending device 410 may filter, based on the ACL filtering rule, the data packet having the first source address prefix, in other words, no longer send the data packet having the first source address prefix to the receiving device 420.

Optionally, in 1394, the receiving device 420 sends a change notification to the sending device 410. Specifically, if the receiving device 420 determines that a graylist entry of the first incoming interface changes, for example, the first source address prefix is no longer the graylist entry of the first incoming interface, the receiving device 420 may generate and send the change notification. For example, when a network topology sensed by the receiving device 420 changes, the first source address prefix may no longer be the graylist entry of the first incoming interface. The change notification may indicate that the first source address prefix is no longer the graylist entry of the first incoming interface (incoming interface B1).

In 1396, the sending device 410 updates the ACL filtering rule based on the change notification. Specifically, the sending device 410 may delete the ACL filtering rule set in 1392, so that the data packet having the first source address prefix is not subsequently filtered, but is sent to the receiving device 420 through the third incoming interface.

In this manner, the sending device 410 may determine, based on the response packet from the receiving device 420, whether the exception (for example, the omission) exists when the source address prefix is processed previously. Therefore, when it is determined that no exception exists, the ACL filtering rule is set to reduce transmission of an invalid packet. To be specific, since the receiving device 420 discards the data packet having the first source address prefix, the sending device 410 does not need to send the data packet. According to the ACL filtering rule, the sending device 410 is prevented from sending the data packet. This can reduce signaling overheads and improve bandwidth utilization.

In this way, according to the foregoing embodiments of this application, the validation device may enable, by using the response packet, the sending device to learn of the usage status information of the address prefix at the receiving device, so that the sending device processes the exception of the address prefix, to help improve accuracy of source address validation, achieve a zero false positive, and minimize a false negative.

It should be understood that, in embodiments of this application, expressions such as "first", "second", and "third" are merely intended to indicate that a plurality of objects may be different, but two objects may be the same. The expressions such as "first", "second", and "third" should not be construed as any limitation on embodiments of this application.

It should be further understood that division into the manners, cases, categories, and embodiments in embodiments of this application is merely for ease of description, and should not constitute a particular limitation. Features in the manners, categories, cases, and embodiments may be combined with each other provided that the features are logical.

It should be further understood that the foregoing content is merely intended to help a person skilled in the art better understand embodiments of this application, instead of limiting the scope of embodiments of this application. A person skilled in the art may make various modifications, variations, combinations, or the like based on the foregoing content. A solution obtained through such a modification, variation, or combination also falls within the scope of embodiments of this application.

It should be further understood that the foregoing content descriptions focus on differences between embodiments. For same or similar parts, refer to each other. For brevity, details are not described herein again.

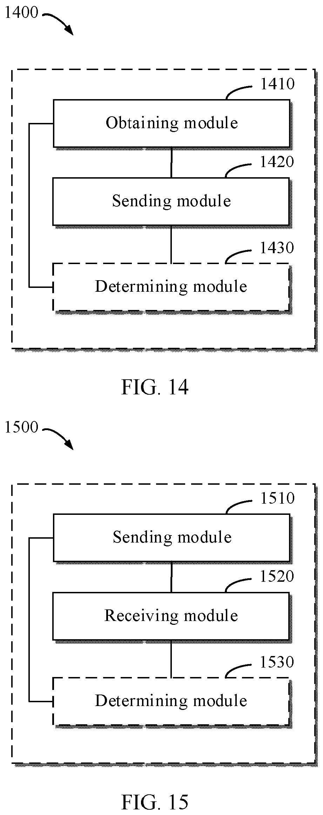

FIG. 14 is a schematic block diagram of a communication apparatus 1400 according to an embodiment of this application. The apparatus 1400 may be implemented by using software, hardware, or a combination thereof. In some embodiments, the apparatus 1400 may be a software or hardware apparatus that implements some or all functions of a validation device (for example, the receiving device 420 or the control device 430 shown in FIG. 4).

As shown in FIG. 14, the apparatus 1400 includes an obtaining module 1410 and a sending module 1420. Optionally, the apparatus 1400 may further include a determining module 1430. In some examples, the obtaining module 1410 may be implemented as a receiving module.

The obtaining module 1410 is configured to obtain an address prefix from a sending device. The sending module 1420 is configured to send a response packet to the sending device, where the response packet indicates usage status information of the address prefix at a receiving device.

In some embodiments of this application, the address prefix includes a source address prefix, the communication apparatus 1400 is the receiving device, and the obtaining module 1410 may be specifically configured to receive an SPA packet from the sending device, where the SPA packet includes the source address prefix.

In some embodiments of this application, the address prefix includes a source address prefix, the communication apparatus 1400 is the receiving device, and the obtaining module 1410 may be specifically configured to: receive an SPA packet from the sending device, where the SPA includes an identifier of the sending device and the source address prefix; and receive a DPP packet from the sending device, where the DPP packet includes the identifier of the sending device. In addition, the determining module 1430 may be configured to determine the source address prefix based on the identifier in the DPP packet and the SPA packet.

Optionally, the communication apparatus 1400 may include an output module, configured to output first alarm information, where the first alarm information is used to provide a suggestion for a validation mode that is for validating the source address prefix.

In some embodiments of this application, the address prefix includes a source address prefix, the communication apparatus 1400 is a control device, and the obtaining module 1410 may be specifically configured to receive an SPA packet from the receiving device, where the SPA packet includes the source address prefix.

In some embodiments of this application, the address prefix includes a source address prefix, the communication apparatus 1400 is a control device, and the obtaining module 1410 may be specifically configured to: receive an SPA packet from the receiving device, where the SPA includes an identifier of the sending device and the source address prefix; and receive a destination prefix probing DPP packet from the receiving device, where the DPP packet includes the identifier of the sending device. In addition, the determining module 1430 may be configured to determine the source address prefix based on the identifier in the DPP packet and the SPA packet.

Optionally, the sending module 1420 may be further configured to send first alarm information to the receiving device, where the first alarm information is used to provide a suggestion for a validation mode that is for validating the source address prefix.

For example, if the usage status information indicates that the source address prefix has a corresponding forwarding entry at the receiving device, and an outgoing interface corresponding to the source address prefix in the forwarding entry is inconsistent with an incoming interface through which the receiving device receives the SPA packet, the first alarm information indicates that a strict URPF validation mode cannot be configured at the receiving device.

For example, if the usage status information indicates that the source address prefix has no corresponding forwarding entry but has a corresponding routing entry at the receiving device, and the routing entry is valid, the first alarm information indicates that an incorrect configuration exists at the receiving device, where the incorrect configuration prevents the routing entry from generating the forwarding entry; or a processing fault that occurs when the routing entry generates the forwarding entry exists at the receiving device.

Optionally, if the usage status information indicates that the source address prefix has no corresponding forwarding entry but has a corresponding routing entry at the receiving device, and the routing entry is invalid, the determining module 1430 may be configured to determine a reason why the routing entry is invalid. In addition, the sending module 1420 may be configured to send, to the sending device, indication information indicating the reason.

In some embodiments, the response packet indicates first usage status information of the source address prefix at the receiving device, and the first usage status information indicates any one of the following: The source address prefix has the corresponding forwarding entry at the receiving device, and the outgoing interface corresponding to the source address prefix in the forwarding entry is consistent with the incoming interface through which the receiving device receives the SPA packet. The source address prefix has the corresponding forwarding entry at the receiving device, and the outgoing interface corresponding to the source address prefix in the forwarding entry is inconsistent with the incoming interface through which the receiving device receives the SPA packet. The source address prefix has no corresponding forwarding entry but has the corresponding routing entry at the receiving device, and the routing entry is valid. The source address prefix has no corresponding forwarding entry but has the corresponding routing entry at the receiving device, and the routing entry is invalid. Alternatively, the source address prefix has no corresponding routing entry at the receiving device.

In some embodiments of this application, the address prefix includes a source address prefix, the communication apparatus 1400 is a control device, and the obtaining module 1410 may be specifically configured to receive a source address validation entry from the receiving device, where the source address validation entry includes the source address prefix. The obtaining module 1410 is further configured to: receive, from the receiving device, information about a validation mode configured for each interface of the receiving device, and receive a traffic packet from the receiving device, where the traffic packet is obtained by performing traffic sampling on an interface that is of the receiving device and that supports DSAV.

Optionally, the sending module 1420 may be configured to send modification suggestion information to the receiving device, where the modification suggestion information is used to suggest adjusting a validation mode of the interface that is of the receiving device and that supports the DSAV.

For example, the usage status information indicates that a data packet having the source address prefix is filtered at the interface that is of the receiving device and that supports the DSAV.

In some embodiments of this application, the address prefix includes a destination address prefix, the communication apparatus 1400 is the receiving device, and the obtaining module 1410 may be specifically configured to receive the DPP packet from the sending device, where the DPP packet includes the destination address prefix.

In some embodiments, the output module may be configured to output second alarm information, where the second alarm information is used to provide a suggestion for a validation mode that is for validating the destination address prefix.

In some embodiments of this application, the address prefix includes a destination address prefix, the communication apparatus 1400 is the control device, and the obtaining module 1410 may be specifically configured to receive the DPP packet from the receiving device, where the DPP packet includes the destination address prefix.

In some embodiments, the sending module 1420 may be configured to send second alarm information to the receiving device, where the second alarm information is used to provide a suggestion for a validation mode that is for validating the destination address prefix.

Optionally, if the usage status information indicates that the destination address prefix has no corresponding forwarding entry but has a corresponding routing entry at the receiving device, the second alarm information indicates that an incorrect configuration exists at the receiving device, where the incorrect configuration prevents the routing entry from generating the forwarding entry; or a processing fault that occurs when the routing entry generates the forwarding entry exists at the receiving device.

In some embodiments, the response packet indicates second usage status information of the destination address prefix at the receiving device, and the second usage status information indicates any one of the following: The destination address prefix has the corresponding forwarding entry at the receiving device, and the routing entry used to generate the forwarding entry originates from the receiving device. The destination address prefix has the corresponding forwarding entry at the receiving device, and an interface to a next hop in the routing entry used to generate the forwarding entry is of a first type, where the first type indicates that a next-hop device supports the DSAV. The destination address prefix has the corresponding forwarding entry at the receiving device, and an interface to a next hop in the routing entry used to generate the forwarding entry is of a second type, where the second type indicates that a next-hop device does not support the DSAV. The destination address prefix has no corresponding forwarding entry but has the corresponding routing entry at the receiving device. Alternatively, the destination address prefix has no corresponding routing entry at the receiving device.

In some embodiments of this application, the communication apparatus 1400 is the receiving device, and the obtaining module 1410 may be specifically configured to receive an SPA packet from the sending device, where the SPA packet includes a source address prefix. The determining module 1430 may be configured to generate a source address validation entry based on the SPA packet, where the source address validation entry includes the source address prefix and an incoming interface through which the communication apparatus 1400 receives the SPA packet. The obtaining module 1410 may be configured to receive a data packet from the sending device, where a source address of the data packet has another source address prefix, and a first incoming interface used to receive the data packet is the same as the incoming interface used to receive the SPA packet. The sending module 1420 may be configured to: if the source address validation entry includes the another source address prefix, and a second incoming interface corresponding to the another source address prefix in the source address validation entry is different from the first incoming interface, send the response packet to the sending device, where the usage status information indicates that the another source address prefix belongs to a graylist entry of the first incoming interface, and a graylist validation mode is configured for the first incoming interface.

For example, the obtaining module 1410 may be further configured to receive a corrected SPA packet from the sending device. The determining module 1430 may be configured to update the source address validation entry based on the corrected SPA packet. The sending module 1420 may be further configured to send a change notification to the sending device, where the change notification indicates that the another source address prefix is no longer the graylist entry of the first incoming interface.

The apparatus 1400 in FIG. 14 can be configured to implement the foregoing processes that are implemented by the receiving device 420 or the control device 430 and that are described with reference to FIG. 5 to FIG. 13. For brevity, details are not described herein again.

FIG. 15 is a schematic block diagram of a communication apparatus 1500 according to an embodiment of this application. The apparatus 1500 may be implemented by using software, hardware, or a combination thereof. In some embodiments, the apparatus 1500 may be a software or hardware apparatus that implements some or all functions of the sending device 410 shown in FIG. 4.

As shown in FIG. 15, the apparatus 1500 includes a sending module 1510 and a receiving module 1520. Optionally, the apparatus 1500 may further include a determining module 1530.

The sending module 1510 is configured to send an address prefix to a receiving device. The receiving module 1520 is configured to receive a response packet from a validation device, where the response packet indicates usage status information of the address prefix at the receiving device.

In some embodiments of this application, the address prefix includes a source address prefix, and the sending module 1510 may be specifically configured to send a source prefix advertisement SPA packet to the receiving device, where the SPA packet includes the source address prefix.

In some embodiments of this application, the address prefix includes a source address prefix, and the sending module 1510 may be specifically configured to: send an SPA packet to the receiving device, where the SPA packet includes an identifier of the apparatus 1500 and the source address prefix; and send a destination prefix probing DPP packet to the receiving device, where the DPP packet includes the identifier of the apparatus 1500.

Optionally, if the usage status information indicates that the source address prefix has no corresponding forwarding entry but has a corresponding routing entry at the receiving device, and the routing entry is invalid, the receiving module 1520 may be further configured to receive indication information that is from the validation device and that indicates a reason why the routing entry is invalid.

For example, the determining module 1530 is configured to determine, based on the response packet, a configuration adjustment policy of the source address prefix at the apparatus 1500.

In some embodiments, the response packet indicates first usage status information of the source address prefix at the receiving device, and the first usage status information indicates any one of the following: The source address prefix has the corresponding forwarding entry at the receiving device, and an outgoing interface corresponding to the source address prefix in the forwarding entry is consistent with an incoming interface through which the receiving device receives the SPA packet. The source address prefix has the corresponding forwarding entry at the receiving device, and an outgoing interface corresponding to the source address prefix in the forwarding entry is inconsistent with an incoming interface through which the receiving device receives the SPA packet. The source address prefix has no corresponding forwarding entry but has the corresponding routing entry at the receiving device, and the routing entry is valid. The source address prefix has no corresponding forwarding entry but has the corresponding routing entry at the receiving device, and the routing entry is invalid. Alternatively, the source address prefix has no corresponding routing entry at the receiving device.

In some embodiments, the usage status information indicates that a data packet having a source address prefix is filtered at an interface that is of the receiving device and that supports DSAV.

In some embodiments of this application, the address prefix includes a destination address prefix, and the sending module 1510 may be specifically configured to send the DPP packet to the receiving device, where the DPP packet includes the destination address prefix.

For example, the determining module 1530 is configured to determine, based on the response packet, a configuration adjustment policy of the destination address prefix at the apparatus 1500.

In some embodiments, the response packet indicates second usage status information of the destination address prefix at the receiving device, and the second usage status information indicates any one of the following: The destination address prefix has a corresponding forwarding entry at the receiving device, and a routing entry used to generate the forwarding entry originates from the receiving device. The destination address prefix has a corresponding forwarding entry at the receiving device, and an interface to a next hop in a routing entry used to generate the forwarding entry is of a first type, where the first type indicates that a next-hop device supports the DSAV. The destination address prefix has a corresponding forwarding entry at the receiving device, and an interface to a next hop in a routing entry used to generate the forwarding entry is of a second type, where the second type indicates that a next-hop device does not support the DSAV. The destination address prefix has no corresponding forwarding entry but has a corresponding routing entry at the receiving device. Alternatively, the destination address prefix has no corresponding routing entry at the receiving device.

In some embodiments of this application, the receiving device is the validation device, and the sending module 1510 may be further configured to send a data packet to the receiving device, where a source address of the data packet has another source address prefix, the usage status information indicates that the another source address prefix belongs to a graylist entry of a first incoming interface, a graylist validation mode is configured for the first incoming interface, and the first incoming interface is an incoming interface through which the receiving device receives the data packet.

Optionally, the sending module 1510 may be further configured to send a corrected SPA packet to the receiving device. The receiving module 1520 may be further configured to receive a change notification from the receiving device, where the change notification indicates that the another source address prefix is no longer the graylist entry of the first incoming interface.

Optionally, the determining module 1530 may be configured to set an access control list (Access Control List, ACL) filtering rule on an interface through which the response packet is received, where the ACL filtering rule indicates that the data packet having the another source address prefix is filtered to prevent the data packet from being sent.

The apparatus 1500 in FIG. 15 can be configured to implement the foregoing processes that are implemented by the sending device 410 and that are described with reference to FIG. 5 to FIG. 14. For brevity, details are not described herein again.

Division into the modules or the units in embodiments of this application is an example, is merely logical function division, and may be other division in actual implementation. In addition, functional units in embodiments of this application may be integrated into one unit, each of the units may exist alone physically, or two or more units may be integrated into one unit. The integrated unit may be implemented in a form of hardware, or may be implemented in a form of a software functional unit.

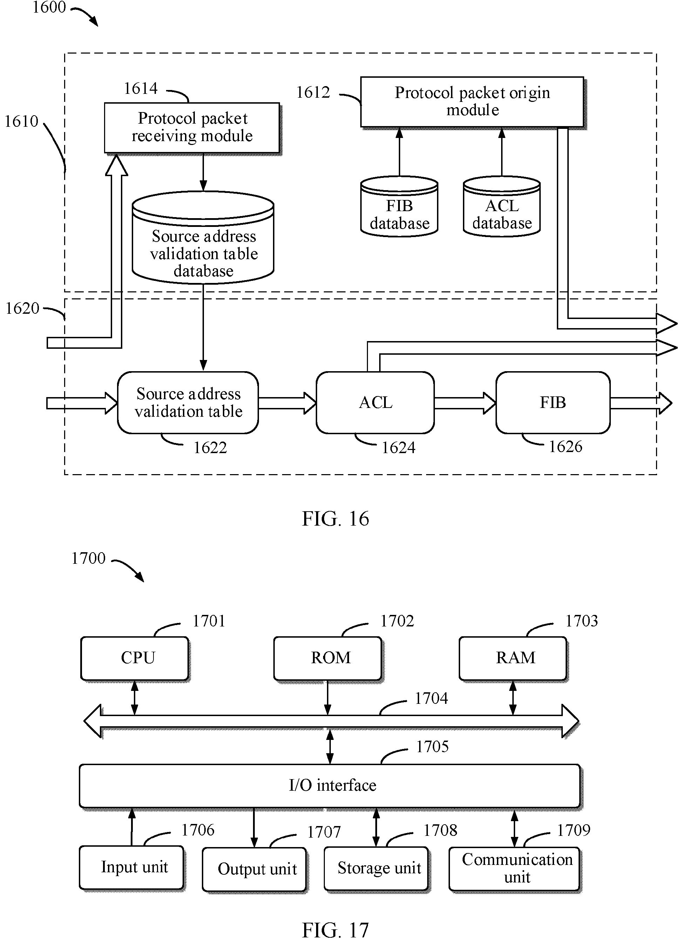

FIG. 16 is a schematic block diagram of a network device 1600 according to an embodiment of this application. In some scenarios, the network device 1600 may be understood as another implementation of the foregoing communication apparatus. For example, the network device 1600 may be implemented as a router, a switch, or the like. This is not limited in this application.

The network device 1600 includes a control plane 1610 and a data plane 1620. The control plane 1610 may be used to generate a protocol packet (for example, through a protocol packet origin module 1612), and may be used to generate address validation information based on a received protocol packet (for example, through a protocol packet receiving module 1614). The data plane 1620 may be used to validate validity of an address (for example, through a source address validation table 1622) and may be used to forward a packet (for example, through an ACL 1624 and an FIB 1624).

It may be understood that in the foregoing embodiments described with reference to FIG. 5 to FIG. 13, some processes performed by the network device are performed by the control plane, some processes are performed by the data plane, and some processes are performed by the control plane in combination with the data plane. Details are not described in this application. In addition, it may be understood that the network device 1600 in FIG. 16 is a schematic diagram of a system architecture from a perspective of a network device. In an actual application, some modules in the network device 1600 shown in FIG. 16 may not be used, or the network device 1600 may further include other modules that are not shown in the figure. This is not limited in this application.

FIG. 17 is a schematic block diagram of an example device 1700 that may be configured to implement an embodiment of this application. The device 1700 may be implemented as or included in the sending device 410, the receiving device 420, or the control device 430 shown in FIG. 4.

As shown in the figure, the device 1700 includes a central processing unit (Central Processing Unit, CPU) 1701, a read-only memory (Read-Only Memory, ROM) 1702, and a random access memory (Random Access Memory, RAM) 1703. The CPU 1701 may perform various proper actions and processing according to computer program instructions stored in the RAM 1702 and/or the RAM 1703 or computer program instructions loaded from a storage unit 1708 to the ROM 1702 and/or the RAM 1703. The ROM 1702 and/or the RAM 1703 may further store various programs and data required for an operation of the device 1700. The CPU 1701 and the ROM 1702 and/or the RAM 1703 are connected to each other through a bus 1704. An input/output (Input/Output, I/O) interface 1705 is also connected to the bus 1704.

A plurality of components in the device 1700 are connected to the I/O interface 1705, and include: an input unit 1706, for example, a keyboard or a mouse; an output unit 1707, for example, any type of display or speaker; the storage unit 1708, for example, a magnetic disk or an optical disc; and a communication unit 1709, for example, a network interface card, a modem, or a wireless communication transceiver. The communication unit 1709 enables the device 1700 to exchange information/data with another device by using a computer network, for example, the Internet, and/or various telecommunication networks.

The CPU 1701 may be any general-purpose and/or dedicated processing component having processing and computing capabilities. Some examples that may be implemented include but are not limited to a graphics processing unit (Graphics Processing Unit, GPU), any dedicated artificial intelligence (Artificial Intelligence, AI) computing chip, any computing unit that runs a machine learning model algorithm, a digital signal processor (Digital Signal Processor, DSP), and any proper processor, controller, microcontroller, and the like. Correspondingly, the CPU 1701 may be referred to as a computing unit. The CPU 1701 performs the methods and processing described above. For example, in some embodiments, the process described above may be implemented as a computer software program, and the computer software program is tangibly included in a computer-readable medium, for example, the storage unit 1708. In some embodiments, some or all of the computer programs may be loaded to and/or installed on the device 1700 through the ROM 1702 and/or the RAM 1703 and/or the communication unit 1709. When the computer program is loaded to the ROM 1702 and/or the RAM 1703 and executed by the CPU 1701, one or more steps of the process described above may be performed. Alternatively, in another embodiment, the CPU 1701 may be configured to execute the process described above in any other proper manner (for example, by using firmware).

For example, the device 1700 in FIG. 17 may be implemented as a computing device, or may be implemented as a chip or a chip system in the computing device. This is not limited in this embodiment of this application.

An embodiment of this application further provides a chip. The chip may include an input interface, an output interface, and a processing circuit. In this embodiment of this application, the input interface and the output interface may complete signaling or data interaction, and the processing circuit may complete generation and processing of the signaling or data information.

An embodiment of this application further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of this application further provides a processor, configured to be coupled to a memory. The memory stores instructions. When the processor runs the instructions, the processor is enabled to perform the method and function in any one of the foregoing embodiments.

An embodiment of this application further provides a computer program product including instructions. When the computer program product runs on a computer, the computer is enabled to perform the method and function in any one of the foregoing embodiments.

An embodiment of this application further provides a computer-readable storage medium. The computer-readable storage medium stores computer instructions. When a processor runs the instructions, the processor is enabled to perform the method and function in any one of the foregoing embodiments.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although aspects of embodiments of this application are shown and described as block diagrams or flowcharts, or represented by some other illustrations, it should be understood that the blocks, apparatuses, systems, technologies, or methods described in this specification may be implemented as, for example, non-limiting examples, hardware, software, firmware, dedicated circuits or logic, general-purpose hardware, controllers, other computing devices, or a combination thereof.

This application further provides at least one computer program product tangibly stored on a non-transitory computer-readable storage medium. The computer program product includes computer-executable instructions, such as instructions included in a program module, which are executed in a device on a real or virtual target processor to perform the process/method as described above with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be locally located and located in a remote storage medium.

Computer program code for implementing the method in this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of this application, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this application are described in a particular order in the accompanying drawings, this does not require or imply that these operations need to be performed in the particular order or that all of the shown operations need to be performed to achieve a desired result. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that features and functions of two or more apparatuses according to this application may be specific in one apparatus. Instead, features and functions of one apparatus described above may be further specific in a plurality of apparatuses.

The foregoing has described the implementations of this application. The foregoing descriptions are examples, are not exhaustive, and are not limited to the disclosed implementations. Many modifications and changes are clear to a person of ordinary skill in the art without departing from the scope of the described implementations. Selection of the terms used in this specification is intended to well explain principles of the implementations, actual applications, or improvements to technologies in the market, or to enable another person of ordinary skill in the art to understand the implementations disclosed in this specification.

## Claims

1. A packet transmission method, comprising:
obtaining, by a validation device, an address prefix from a sending device; and
sending, by the validation device, a response packet to the sending device, wherein the response packet indicates usage status information of the address prefix at a receiving device.

2. The method according to claim 1, wherein the address prefix comprises a source address prefix, the validation device is the receiving device, and the obtaining, by a validation device, an address prefix from a sending device comprises:
receiving, by the validation device, a source prefix advertisement SPA packet from the sending device, wherein the SPA packet comprises the source address prefix.

3. The method according to claim 1, wherein the address prefix comprises a source address prefix, the validation device is the receiving device, and the obtaining, by a validation device, an address prefix from a sending device comprises:
receiving, by the validation device, an SPA packet from the sending device, wherein the SPA packet comprises an identifier of the sending device and the source address prefix;
receiving, by the validation device, a destination prefix probing DPP packet from the sending device, wherein the DPP packet comprises the identifier of the sending device; and
determining, by the validation device, the source address prefix based on the identifier in the DPP packet and the SPA packet.

4. The method according to claim 2 or 3, wherein the method further comprises:
outputting, by the validation device, first alarm information, wherein the first alarm information is used to provide a suggestion for a validation mode that is for validating the source address prefix.

5. The method according to claim 1, wherein the address prefix comprises a source address prefix, the validation device is a control device, and the obtaining, by a validation device, an address prefix from a sending device comprises:
receiving, by the validation device, an SPA packet from the receiving device, wherein the SPA packet comprises the source address prefix.

6. The method according to claim 1, wherein the address prefix comprises a source address prefix, the validation device is a control device, and the obtaining, by a validation device, an address prefix from a sending device comprises:
receiving, by the validation device, an SPA packet from the receiving device, wherein the SPA packet comprises an identifier of the sending device and the source address prefix;
receiving, by the validation device, a destination prefix probing DPP packet from the receiving device, wherein the DPP packet comprises the identifier of the sending device; and
determining, by the validation device, the source address prefix based on the identifier in the DPP packet and the SPA packet.

7. The method according to claim 5 or 6, wherein the method further comprises:
sending, by the validation device, first alarm information to the receiving device, wherein the first alarm information is used to provide a suggestion for a validation mode that is for validating the source address prefix.

8. A packet transmission method, comprising:
sending, by a sending device, an address prefix to a receiving device; and
receiving, by the sending device, a response packet from a validation device, wherein the response packet indicates usage status information of the address prefix at the receiving device.

9. The method according to claim 8, wherein the address prefix comprises a source address prefix, and the sending, by a sending device, an address prefix to a receiving device comprises:
sending, by the sending device, a source prefix advertisement SPA packet to the receiving device, wherein the SPA packet comprises the source address prefix.

10. The method according to claim 8, wherein the address prefix comprises a source address prefix, and the sending, by a sending device, an address prefix to a receiving device comprises:
sending, by the sending device, an SPA packet to the receiving device, wherein the SPA packet comprises an identifier of the sending device and the source address prefix; and
sending, by the sending device, a destination prefix probing DPP packet to the receiving device, wherein the DPP packet comprises the identifier of the sending device.

11. The method according to claim 9 or 10, wherein if the usage status information indicates that the source address prefix has no corresponding forwarding entry but has a corresponding routing entry at the receiving device, and the routing entry is invalid, the method further comprises:
receiving, by the sending device, indication information that is from the validation device and that indicates a reason why the routing entry is invalid.

12. The method according to any one of claims 9 to 11, further comprising:
determining, by the sending device based on the response packet, a configuration adjustment policy of the source address prefix at the sending device.

13. The method according to any one of claims 9 to 12, wherein the response packet indicates first usage status information of the source address prefix at the receiving device, and the first usage status information indicates any one of the following:
the source address prefix has the corresponding forwarding entry at the receiving device, and an outgoing interface corresponding to the source address prefix in the forwarding entry is consistent with an incoming interface through which the receiving device receives the SPA packet;
the source address prefix has the corresponding forwarding entry at the receiving device, and an outgoing interface corresponding to the source address prefix in the forwarding entry is inconsistent with an incoming interface through which the receiving device receives the SPA packet;
the source address prefix has no corresponding forwarding entry but has the corresponding routing entry at the receiving device, and the routing entry is valid;
the source address prefix has no corresponding forwarding entry but has the corresponding routing entry at the receiving device, and the routing entry is invalid; or
the source address prefix has no corresponding routing entry at the receiving device.

14. A communication apparatus, comprising:
a module or a unit configured to perform the method according to any one of claims 1 to 7; or
a module or a unit configured to perform the method according to any one of claims 8 to 13.

15. A communication apparatus, comprising:
a processor; and
a memory, wherein the memory stores computer-executable instructions, and when the computer-executable instructions are executed by the processor, the method according to any one of claims 1 to 7 is implemented, or the method according to any one of claims 8 to 13 is implemented.

## Patentansprüche

1. Paketübertragungsverfahren, umfassend:
Erlangen, durch eine Validierungseinrichtung, eines Adresspräfixes von einer Sendeeinrichtung; und
Senden, durch die Validierungseinrichtung, eines Antwortpakets an die Sendeeinrichtung, wobei das Antwortpaket Nutzungsstatusinformationen des Adresspräfixes an einer Empfangseinrichtung angibt.

2. Verfahren nach Anspruch 1, wobei das Adresspräfix ein Quelladresspräfix umfasst, die Validierungseinrichtung die Empfangseinrichtung ist und das Erlangen, durch eine Validierungseinrichtung, eines Adresspräfixes von einer Sendeeinrichtung Folgendes umfasst:
Empfangen, durch die Validierungseinrichtung, eines Quellpräfixankündigungspakets, SPA-Pakets, von der Sendeeinrichtung, wobei das SPA-Paket das Quelladresspräfix umfasst.

3. Verfahren nach Anspruch 1, wobei das Adresspräfix ein Quelladresspräfix umfasst, die Validierungseinrichtung die Empfangseinrichtung ist und das Erlangen, durch eine Validierungseinrichtung, eines Adresspräfixes von einer Sendeeinrichtung Folgendes umfasst:
Empfangen, durch die Validierungseinrichtung, eines SPA-Pakets von der Sendeeinrichtung, wobei das SPA-Paket eine Kennung der Sendeeinrichtung und das Quelladresspräfix umfasst;
Empfangen, durch die Validierungseinrichtung, eines Zielpräfixprüfpakets, DPP-Pakets, von der Sendeeinrichtung, wobei das DPP-Paket die Kennung der Sendeeinrichtung umfasst; und
Bestimmen, durch die Validierungseinrichtung, des Quelladresspräfixes basierend auf der Kennung in dem DPP-Paket und dem SPA-Paket.

4. Verfahren nach Anspruch 2 oder 3, wobei das Verfahren ferner Folgendes umfasst:
Ausgeben, durch die Validierungseinrichtung, von ersten Alarminformationen, wobei die ersten Alarminformationen verwendet werden, um einen Vorschlag für einen Validierungsmodus bereitzustellen, der dem Validieren des Quelladresspräfixes dient.

5. Verfahren nach Anspruch 1, wobei das Adresspräfix ein Quelladresspräfix umfasst, die Validierungseinrichtung eine Steuereinrichtung ist und das Erlangen, durch eine Validierungseinrichtung, eines Adresspräfixes von einer Sendeeinrichtung Folgendes umfasst:
Empfangen, durch die Validierungseinrichtung, eines SPA-Pakets von der Empfangseinrichtung, wobei das SPA-Paket das Quelladresspräfix umfasst.

6. Verfahren nach Anspruch 1, wobei das Adresspräfix ein Quelladresspräfix umfasst, die Validierungseinrichtung eine Steuereinrichtung ist und das Erlangen, durch eine Validierungseinrichtung, eines Adresspräfixes von einer Sendeeinrichtung Folgendes umfasst:
Empfangen, durch die Validierungseinrichtung, eines SPA-Pakets von der Empfangseinrichtung, wobei das SPA-Paket eine Kennung der Sendeeinrichtung und das Quelladresspräfix umfasst;
Empfangen, durch die Validierungseinrichtung, eines Zielpräfixprüfpakets, DPP-Pakets, von der Empfangseinrichtung, wobei das DPP-Paket die Kennung der Sendeeinrichtung umfasst; und
Bestimmen, durch die Validierungseinrichtung, des Quelladresspräfixes basierend auf der Kennung in dem DPP-Paket und dem SPA-Paket.

7. Verfahren nach Anspruch 5 oder 6, wobei das Verfahren ferner Folgendes umfasst:
Senden, durch die Validierungseinrichtung, von ersten Alarminformationen an die Empfangseinrichtung, wobei die ersten Alarminformationen verwendet werden, um einen Vorschlag für einen Validierungsmodus bereitzustellen, welcher der Validierung des Quelladresspräfixes dient.

8. Paketübertragungsverfahren, umfassend:
Senden, durch eine Sendeeinrichtung, eines Adresspräfixes an eine Empfangseinrichtung; und
Empfangen, durch die Sendeeinrichtung, eines Antwortpakets von einer Validierungseinrichtung, wobei das Antwortpaket Nutzungsstatusinformationen des Adresspräfixes an der Empfangseinrichtung angibt.

9. Verfahren nach Anspruch 8, wobei das Adresspräfix ein Quelladresspräfix umfasst und das Senden, durch eine Sendeeinrichtung, eines Adresspräfixes an eine Empfangseinrichtung Folgendes umfasst:
Senden, durch die Sendeeinrichtung, eines Quellpräfixankündigungspakets, SPA-Pakets, an die Empfangseinrichtung, wobei das SPA-Paket das Quelladresspräfix umfasst.

10. Verfahren nach Anspruch 8, wobei das Adresspräfix ein Quelladresspräfix umfasst und das Senden, durch eine Sendeeinrichtung, eines Adresspräfixes an eine Empfangseinrichtung Folgendes umfasst:
Senden, durch die Sendeeinrichtung, eines SPA-Pakets an die Empfangseinrichtung, wobei das SPA-Paket eine Kennung der Sendeeinrichtung und das Quelladresspräfix umfasst; und
Senden, durch die Sendeeinrichtung, eines Zielpräfixprüfpakets, DPP-Pakets, an die Empfangseinrichtung, wobei das DPP-Paket die Kennung der Sendeeinrichtung umfasst.

11. Verfahren nach Anspruch 9 oder 10, wobei, wenn die Nutzungsstatusinformationen angeben, dass das Quelladresspräfix keinen entsprechenden Weiterleitungseintrag aufweist, jedoch einen entsprechenden Routingeintrag an der Empfangseinrichtung aufweist und der Routingeintrag ungültig ist, das Verfahren ferner Folgendes umfasst:
Empfangen, durch die Sendeeinrichtung, von Angabeinformationen, die von der Validierungseinrichtung stammen und einen Grund angeben, weshalb der Routingeintrag ungültig ist.

12. Verfahren nach einem der Ansprüche 9 bis 11, ferner umfassend:
Bestimmen, durch die Sendeeinrichtung basierend auf dem Antwortpaket, einer Konfigurationsanpassungsrichtlinie des Quelladressenpräfixes an der Sendeeinrichtung.

13. Verfahren nach einem der Ansprüche 9 bis 12, wobei das Antwortpaket erste Nutzungsstatusinformationen des Quelladresspräfixes auf der Empfangseinrichtung angeben und die ersten Nutzungsstatusinformationen eines des Folgenden angeben:
das Quelladresspräfix weist den entsprechenden Weiterleitungseintrag an der Empfangseinrichtung auf und eine ausgehende Schnittstelle, die dem Quelladresspräfix in dem Weiterleitungseintrag entspricht, ist konsistent mit einer eingehenden Schnittstelle, über welche die Empfangseinrichtung das SPA-Paket empfängt;
das Quelladresspräfix weist den entsprechenden Weiterleitungseintrag an der Empfangseinrichtung auf und eine ausgehende Schnittstelle, die dem Quelladresspräfix in dem Weiterleitungseintrag entspricht, ist inkonsistent mit einer eingehenden Schnittstelle, über welche die Empfangseinrichtung das SPA-Paket empfängt;
das Quelladresspräfix weist keinen entsprechenden Weiterleitungseintrag auf, weist jedoch den entsprechenden Routingeintrag an der Empfangseinrichtung auf und der RoutingEintrag ist gültig;
das Quelladresspräfix weist keinen entsprechenden Weiterleitungseintrag auf, weist jedoch den entsprechenden Routingeintrag an der Empfangseinrichtung auf und der RoutingEintrag ist ungültig; oder
das Quelladresspräfix weist keinen entsprechenden Routingeintrag an der Empfangseinrichtung auf.

14. Kommunikationsvorrichtung, umfassend:
ein Modul oder eine Einheit, das/die dazu konfiguriert ist, das Verfahren nach einem der Ansprüche 1 bis 7 durchzuführen; oder
ein Modul oder eine Einheit, das/die dazu konfiguriert ist, das Verfahren nach einem der Ansprüche 8 bis 13 durchzuführen.

15. Kommunikationsvorrichtung, umfassend:
einen Prozessor; und
einen Speicher, wobei der Speicher computerausführbare Anweisungen speichert und, wenn die computerausführbaren Anweisungen durch den Prozessor ausgeführt werden, das Verfahren nach einem der Ansprüche 1 bis 7 umgesetzt wird oder das Verfahren nach einem der Ansprüche 8 bis 13 umgesetzt wird.

## Revendications

1. Procédé de transmission de paquets, comprenant :
l'obtention, par un dispositif de validation, d'un préfixe d'adresse à partir d'un dispositif d'envoi ; et
l'envoi, par le dispositif de validation, d'un paquet de réponse au dispositif d'envoi, dans lequel le paquet de réponse indique les informations d'état d'utilisation du préfixe d'adresse sur un dispositif de réception.

2. Procédé selon la revendication 1, dans lequel le préfixe d'adresse comprend un préfixe d'adresse source, le dispositif de validation est le dispositif de réception, et l'obtention, par un dispositif de validation, d'un préfixe d'adresse à partir d'un dispositif d'envoi comprend :
la réception, par le dispositif de validation, d'un paquet d'annonce de préfixe source SPA provenant du dispositif d'envoi, dans lequel le paquet SPA comprend le préfixe d'adresse source.

3. Procédé selon la revendication 1, dans lequel le préfixe d'adresse comprend un préfixe d'adresse source, le dispositif de validation est le dispositif de réception, et l'obtention, par un dispositif de validation, d'un préfixe d'adresse à partir d'un dispositif d'envoi comprend :
la réception, par le dispositif de validation, d'un paquet SPA provenant du dispositif d'envoi, dans lequel le paquet SPA comprend un identifiant du dispositif d'envoi et le préfixe d'adresse source ;
la réception, par le dispositif de validation, d'un paquet d'enquête de préfixe de destination DPP provenant du dispositif d'envoi, dans lequel le paquet DPP comprend l'identifiant du dispositif d'envoi ; et
la détermination, par le dispositif de validation, du préfixe d'adresse source sur la base de l'identifiant dans le paquet DPP et le paquet SPA.

4. Procédé selon la revendication 2 ou 3, dans lequel le procédé comprend en outre :
la sortie, par le dispositif de validation, de premières informations d'alarme, dans lequel les premières informations d'alarme sont utilisées pour fournir une suggestion pour un mode de validation qui est destiné à valider le préfixe d'adresse source.

5. Procédé selon la revendication 1, dans lequel le préfixe d'adresse comprend un préfixe d'adresse source, le dispositif de validation est un dispositif de commande, et l'obtention, par un dispositif de validation, d'un préfixe d'adresse à partir d'un dispositif d'envoi comprend :
la réception, par le dispositif de validation, d'un paquet SPA provenant du dispositif de réception, dans lequel le paquet SPA comprend le préfixe d'adresse source.

6. Procédé selon la revendication 1, dans lequel le préfixe d'adresse comprend un préfixe d'adresse source, le dispositif de validation est un dispositif de commande, et l'obtention, par un dispositif de validation, d'un préfixe d'adresse à partir d'un dispositif d'envoi comprend :
la réception, par le dispositif de validation, d'un paquet SPA provenant du dispositif de réception, dans lequel le paquet SPA comprend un identifiant du dispositif d'envoi et le préfixe d'adresse source ;
la réception, par le dispositif de validation, d'un paquet d'enquête de préfixe de destination DPP provenant du dispositif de réception, dans lequel le paquet DPP comprend l'identifiant du dispositif d'envoi ; et
la détermination, par le dispositif de validation, du préfixe d'adresse source sur la base de l'identifiant dans le paquet DPP et le paquet SPA.

7. Procédé selon la revendication 5 ou 6, dans lequel le procédé comprend en outre :
l'envoi, par le dispositif de validation, de premières informations d'alarme au dispositif de réception, dans lequel les premières informations d'alarme sont utilisées pour fournir une suggestion pour un mode de validation qui est destiné à valider le préfixe d'adresse source.

8. Procédé de transmission de paquets, comprenant :
l'envoi, par un dispositif d'envoi, d'un préfixe d'adresse à un dispositif de réception ; et
la réception, par le dispositif d'envoi, d'un paquet de réponse provenant d'un dispositif de validation, dans lequel le paquet de réponse indique les informations d'état d'utilisation du préfixe d'adresse sur le dispositif de réception.

9. Procédé selon la revendication 8, dans lequel le préfixe d'adresse comprend un préfixe d'adresse source, et l'envoi, par un dispositif d'envoi, d'un préfixe d'adresse à un dispositif de réception comprend :
l'envoi, pas le dispositif d'envoi, d'un paquet d'annonce de préfixe source SPA au dispositif de réception, dans lequel le paquet SPA comprend le préfixe d'adresse source.

10. Procédé selon la revendication 8, dans lequel le préfixe d'adresse comprend un préfixe d'adresse source, et l'envoi, par un dispositif d'envoi, d'un préfixe d'adresse à un dispositif de réception comprend :
l'envoi, par le dispositif d'envoi, d'un paquet SPA au dispositif de réception, dans lequel le paquet SPA comprend un identifiant du dispositif d'envoi et le préfixe d'adresse source ; et
l'envoi, par le dispositif d'envoi, d'un paquet d'enquête de préfixe de destination DPP au dispositif de réception, dans lequel le paquet DPP comprend l'identifiant du dispositif d'envoi.

11. Procédé selon la revendication 9 ou 10, dans lequel si les informations d'état d'utilisation indiquent que le préfixe d'adresse source n'a pas d'entrée de transfert correspondante mais a une entrée de routage correspondante sur le dispositif de réception, et que l'entrée de routage est invalide, le procédé comprend en outre :
la réception, par le dispositif d'envoi, d'informations d'indication qui proviennent du dispositif de validation et qui indiquent une raison pour laquelle l'entrée de routage est invalide.

12. Procédé selon l'une quelconque des revendications 9 à 11, comprenant en outre :
la détermination, par le dispositif d'envoi sur la base du paquet de réponse, d'une politique d'ajustement de configuration du préfixe d'adresse source sur le dispositif d'envoi.

13. Procédé selon l'une quelconque des revendications 9 à 12, dans lequel le paquet de réponse indique les premières informations d'état d'utilisation du préfixe d'adresse source sur le dispositif de réception, et les premières informations d'état d'utilisation indiquent l'un des éléments suivants :
le préfixe d'adresse source a l'entrée de transfert correspondante sur le dispositif de réception, et une interface de sortie correspondant au préfixe d'adresse source dans l'entrée de transfert est cohérente avec une interface d'entrée par laquelle le dispositif de réception reçoit le paquet SPA ;
le préfixe d'adresse source a l'entrée de transfert correspondante sur le dispositif de réception, et une interface de sortie correspondant au préfixe d'adresse source dans l'entrée de transfert est incohérente avec une interface d'entrée par laquelle le dispositif de réception reçoit le paquet SPA ;
le préfixe d'adresse source n'a pas d'entrée de transfert correspondante mais a l'entrée de routage correspondante sur le dispositif de réception, et l'entrée de routage est valide ;
le préfixe d'adresse source n'a pas d'entrée de transfert correspondante mais a l'entrée de routage correspondante sur le dispositif de réception, et l'entrée de routage est invalide ; ou
le préfixe d'adresse source n'a aucune entrée de routage correspondante sur le dispositif de réception.

14. Appareil de communication, comprenant :
un module ou une unité configuré(e) pour réaliser le procédé selon l'une quelconque des revendications 1 à 7 ; ou
un module ou une unité configuré(e) pour réaliser le procédé selon l'une quelconque des revendications 8 à 13.

15. Appareil de communication, comprenant :
un processeur ; et
une mémoire, dans lequel la mémoire stocke des instructions exécutables sur ordinateur, et lorsque les instructions exécutables sur ordinateur sont exécutées par le processeur, le procédé selon l'une quelconque des revendications 1 à 7 est mis en œuvre, ou le procédé selon l'une quelconque des revendications 8 à 13 est mis en œuvre.
